# EUROPÄISCHE PATENTSCHRIFT

(11) **EP 2 734 726 B1**
(45) Veröffentlichungstag und Bekanntmachung des Hinweises auf die Patenterteilung: **31.08.2016**
(21) Anmeldenummer: 12720077.2
(22) Anmeldetag: 27.04.2012
(51) Int. Cl.: F03B 7/00

(54) **VORRICHTUNG ZUR GEWINNUNG VON ELEKTRISCHER ENERGIE AUS WASSERKRAFT**
DEVICE FOR THE EXTRACTION OF ELECTRICAL ENERGY FROM HYDROPOWER
DISPOSITIF DE PRODUCTION D'ÉNERGIE ÉLECTRIQUE À PARTIR DE L'ÉNERGIE DE L'EAU

(30) Priorität: 22.07.2011 CH 12332011
(43) Veröffentlichungstag der Anmeldung: 28.05.2014
(73) Patentinhaber: WRH Walter Reist Holding AG, 8272 Ermatingen (CH)
(72) Erfinder: WIDMER, Felix, CH-8404 Winterthur (CH)
(74) Vertreter: Frei Patent Attorneys
(86) Internationale Anmeldenummer: PCT/CH2012/000094
(87) Internationale Veröffentlichungsnummer: WO 2013/013328

(56) Entgegenhaltungen:
- EP-A1- 1 795 747
- WO-A1-2011/041918
- US-A- 119 580
- US-A- 192 286
- US-A- 827 845
- US-A- 920 361
- US-A- 1 567 971
- US-A- 2 758 814

## Beschreibung

Die Erfindung betrifft eine Anlage zur Gewinnung von elektrischer Energie aus Wasserkraft, enthaltend eine um zwei voneinander beabstandete Umlenkorgane umlaufende Antriebsanordnung, welche durch Wasserkraft in eine Umlaufrichtung antreibbar ist, mit einem entlang eines Gefälles verlaufenden Lastabschnitt, wobei die Antriebsanordnung eine Mehrzahl von in Umlaufrichtung hintereinander angeordneten und voneinander beabstandeten Gravitationsdruckübertragungseinheiten mit jeweils einem Anströmorgan enthält, ferner enthaltend einen Generator zur Gewinnung von elektrischer Energie aus der umlaufenden Antriebsanordnung.

Es sind eine Vielzahl von Vorrichtungen bekannt, welche das Potentialgefälle von Wasser oder dessen kinetische Energie nutzen, um daraus elektrische Energie zu gewinnen. In diesem Zusammenhang unterscheidet man grundsätzlich zwei Anlagentypen.

Gemäss einem ersten Anlagetyp wird die kinetische Energie des anströmenden Wasser genutzt, um damit einen Generator zur Stromerzeugung anzutreiben. Hierzu sind Anströmorgane, wie Turbinenschaufeln, vorgesehen, welche vom Wasser angeströmt und durch dieses in Bewegung gesetzt werden. Wasserkraftanlagen des ersten Typs finden sich in Flusskraftwerken oder Speicherkraftwerken. Auch das mittel-unterschlächtige Wasserrad wird auf diese Weise betrieben.

Gemäss einem zweiten Anlagentyp wird nicht primär die kinetische Energie des anströmenden Wassers sondern vielmehr dessen frei werdende potentielle Energie während des Durchlaufens eines Potentialgefälles genutzt. Das heisst, gemäss diesem Prinzip treibt die Gravitationskraft des auf Anströmorgan wirkenden Wassers ein Antriebsorgan an. Dieses Prinzip wird beispielsweise beim oberschlächtigen Wasserrad genutzt.

Die EP-A-1 731 756 beschreibt beispielsweise eine Wasserkraftanlage, bei welcher die potentielle Energie von Wasser zur Gewinnung von elektrischer Energie genutzt wird. Die Anlage umfasst eine Wasserkrafteinheit mit einem vertikalen Schacht und einen mit der Wasserkrafteinheit verbundenen Generator. Im Schacht sind an einer Kette befestigte Schaufeln angeordnet, welche ein bestimmtes Volumen Wasser aufnehmen. Durch das auf den Schaufeln lastende Gewicht des Wassers wird die Kette und über diese ein Generator angetrieben. Die Anlage ist jedoch vergleichsweise unflexibel bezüglich ihrer Einsatzmöglichkeiten, da diese nur zusammen mit einem vertikalen Schacht ausführbar ist.

Die WO 2011/041918 beschreibt ebenfalls eine Anlage zur Gewinnung von elektrischer Energie aus Wasserkraft. Diese enthält eine umlaufende Antriebskette mit einem Last- und einem Rücktrum. Die Antriebskette ist in einer Umlaufrichtung um zwei sowohl horizontal als auch vertikal voneinander versetzt angeordnete Umlenkorgane geführt. Die Antriebskette enthält eine Mehrzahl, von in Umlaufrichtung hintereinander angeordnete und voneinander beabstandete Anströmorgane. Die Anströmorgane bilden jeweils Teil eines Kettengliedes der Antriebskette. Die Anströmorgane greifen auf der Seite des Lasttrums in einen geneigten Wasserführungskanal ein und bilden mit den seitlichen Kanalwänden sowie dem Kanalboden Wasseraufnahmeabteile aus. Die einzelnen Wasseraufnahmeabteile nehmen im Einlaufbereich ein bestimmtes Volumen Wasser auf, welches erst im Auslassbereich wieder aus dem Wasseraufnahmeabteil entlassen wird.

Im Weiteren enthält die Anlage einen Generator zur Gewinnung von elektrischer Energie aus der umlaufenden Antriebskette. Das Wasser wird an einem höher gelegenen Einlaufbereich in den Wasserführungskanal eingespiesen, wobei die in den Wasserführungskanal eintauchenden Schaufeln das einfliessende Wasser in den gebildeten Wasseraufnahineabteilen zurückhalten. Die Schaufeln werden durch die Gewichtskraft des Wassers angetrieben, wodurch das Wasser in den Aufnahmeabteilen entlang des Wasserführungskanals zu einer tiefer gelegenen Auslassöffnung geführt wird. Die beschriebene Lösung weist den Nachteil auf, dass die Schaufelführung im Wasserführungskanal recht unpräzise ist, so dass die Aufnahmeabteile in Bewegungsrichtung für das mitgeführte Wasser zu durchlässig sind und ein Teil des mitgeführten Wassers ungenützt den Wasserführungskanal zum Auslassbereich hinunter fliesst.

Es ist daher Aufgabe vorliegender Erfindung, die Führung der Anströmorgane im Wasserführungskanal sowie die Wasserführung im Allgemeinen zu verbessern, um nicht zuletzt den Wirkungsgrad der Anlage zu erhöhen.

Die **Aufgabe** wird durch die Merkmale des unabhängigen Anspruchs gelöst. Weitere bevorzugte Ausführungsformen und Weiterbildungen der Erfindung gehen aus den abhängigen Patentansprüchen hervor. Dabei sind Merkmale der Verfahrensansprüche sinngemäss mit den Vorrichtungsansprüchen kombinierbar und umgekehrt.

Die Erfindung zeichnet sich also dadurch aus, dass die Gravitationsdruckübertragungseinheiten Führungselemente umfassen und die Anlage entlang des Lastabschnitts Führungsmittel enthält, in welcher Führungselemente der Gravitationsdruckübertragungseinheiten verschiebbar angeordnet sind, derart dass die Gravitationsdruckübertragungseinheiten wenigstens im Bereich des Lastabschnitts zwischen den beiden Umlenkorganen führbar sind.

Gravitationsdruckübertragungseinheiten sind bevorzugt über die in den Führungsmitteln geführten Führungselemente zwangsgeführt. Zwangsgeführt bedeutet, dass die Führungselemente über die Führungsmittel, bezogen auf ein dreidimensionales orthogonales oder polares Koordinatensystem, wenigstens in zwei Raumrichtungen gerührt sind. Diese zwei Raumrichtungen sind einander bevorzugt entgegen gesetzt.

Die Gravitationsdruckübertragungseinheiten sind bevorzugt mehrteilig ausgebildet. So sind die Führungselemente und Anströmorgane bevorzugt als separate Bauteile ausgebildet.

Die beiden Umlenkorgane sind bevorzugt sowohl horizontal als auch vertikal zueinander versetzt angeordnet.

Die erfindungsgemässe Anlage umfasst im Weiteren einen, entlang eines Gefälles bzw. einer Neigung verlaufenden Wasserführungskanal, wobei die Anströmorgane der Gravitationsdruckübertragungseinheiten im Bereich des Lastabschnittes quer zum Wasserführungskanal verlaufen und in diesen eingreifen.

Jeweils zwei benachbarte Anströmorgane bilden im Bereich des Lastabschnittes zusammen mit den Kanalwänden ein entlang des Wasserführungskanals mitbewegtes Wasseraufnahmeabteil aus. Das Anströmorgan, welches in einem Einlaufbereich vom Wasser angeströmt wird, dient somit auch als Abteiltrennelement.

Die einzelnen Wasseraufnahmeabteile nehmen in Einlaufbereich ein bestimmtes Volumen Wasser auf, welches erst im Auslassbereich wieder aus dem Wasseraufnahmeabteil entlassen wird.

Der Wasserführungskanal, oder auch Rinne genannt, bildet bevorzugt ein U-formiges Querschnittsprofil mit einem Kanalboden und zwei Kanalseitenwänden aus. Die Anströmorgane sind zweckmässig berührungsfrei im Wasserführungskanal geführt.

Da die Position der Anströmorgane relativ zum Wasserführungskanal dank der Zwangsführung durch die Führungsmittel sehr genau festgelegt werden kann, weisen die Anströmorgane nur geringe Abstände zu den benachbarten Kanalwänden auf. Der Spaltabstand kann z. B. lediglich 1 bis 5 mm, insbesondere lediglich 2 bis 3 mm, betragen.

Ein oberes Umlenkorgan ist bevorzugt in einem Einlaufbereich angeordnet, in welchem dass Wasser in den Wasserführungskanal eingelassen wird. Ein unteres Umlenkorgan ist bevorzugt in einem Auslassbereich angeordnet, in welchem das Wasser aus den Wasseraufnahmeabteilen entlassen wird. Die Gravitationsdruckübertragungseinheiten werden entlang eines Rückführabschnittes aus dem Auslassbereich in den Einlaufbereich zurückgeführt. Der Rückführabschnitt verläuft bevorzugt oberhalb des Lastabschnittes. Der Rückführabschnitt ist bevorzugt parallel zum Lastabschnitt geführt.

Das Wasser kann im Einlaufbereich parallel zur Umlaufrichtung, also frontal auf die Anströmorgane und in den Wasserführungskanal einströmen. Bei gewissen Konfigurationen strömt das Wasser im Einlaufbereich jedoch bevorzugt in Umlaufrichtung betrachtet seitlich schräg an die Anströmorgane heran und in die Wasseraufnahmeabteile ein. Eine Kombination von frontaler und seitlich schräger Anströmung ist auch möglich.

Die Anströmorgane sind bevorzugt als Wandelemente, insbesondere als schaufelförmige Wandelemente ausgebildet. Die Anströmorgane können z. B. beidseitig, entgegen der Bewegungsrichtung der Antriebsanordnung gekrümmte Seitenwandbereiche aufweisen, welche eine schaufelartige Aufnahme ausbilden. Dank einer solchen Formgebung wird der Einlaufvorgang des Wassers optimiert.

Die Anströmorgane sind bevorzugt in Leichtbauweise ausgebildet. D.h., die Wandelemente sind bevorzugt dünnwandig ausgebildet. Ferner sind die Anströmorgane bevorzugt aus einem Leichtbauwerkstoff, wie Aluminium oder Kunststoff, insbesondere Faserverbundkunststoff, gefertigt. Die Anströmorgane können auch aus einem Aluminium-Kunststoff-Aluminium-Verbundplattenelement ausgebildet sein.

Die Breite (Längenausdehnung quer zum Wasserführungskanal) des Anströmorgans ist zweckmässig wesentlich grösser als dessen Tiefe bzw. Höhe. So beträgt das Verhältnis Breite zu Tiefe bevorzugt 2:1 und grösser, und insbesondere 3:1 und grösser oder sogar 4:1 und grösser. Es ist auch denkbar, dass das Verhältnis Breite zu Höhe in einem ähnlichen Bereich liegt. So kann dieses Verhältnis z. B. 2:1 und grösser, insbesondere 3:1 und grösser oder sogar 4:1 und grösser betragen.

Dank der angegebenen Längen-Verhältnisse lassen sich bessere Füllergebnisse für die Wasseraufnahmeabteile erreichen. Dies liegt unter anderem daran, dass die Breite des Wasserzulaufs im Einlaufbereich im Vergleich zur Tiefe der auszubildenden Wasseraufnahmeabteile verhältnismässig gross ist, was eine schnelle und entsprechend hohe Befüllung der Wasseraufnahmeabteile zulässt. Die Breite der Anströmorgane kann z. B. rund 1000 mm betragen, während die Tiefe rund 250 mm beträgt.

Damit die wandförmigen Anströmorgane eine genügend hohe Steifigkeit erhalten, um dem Wasserdruck zu widerstehen, weisen diese jeweils bevorzugt wenigstens ein Versteifungselement, auch Verstärkungselement genannt, auf. Bevorzugt weisen die Anströmorgane jeweils wenigstens zwei, aussermittig bzw. seitlich angeordnete Versteifungselemente auf. Die Versteifungselemente sind bevorzugt in einem seitlichen Endbereich der Anströmorgane angeordnet. Die Versteifungselemente können z. B. als Versteifungsrippen oder Versteifungswände bzw. Querwände ausgebildet sein.

Die Versteifungswände können geschlossen oder mit Durchbrüchen versehen sein. Die Versteifungswände können insbesondere auch als offene Fachwerkkonstruktion ausgebildet sein. Die Querwände verlaufen bevorzugt parallel zur Bewegungsrichtung der Antriebsanordnung. Die Querwände können über eine Kraft-, Form- oder Stoffschlussverbindung an das Anströmorgan angebracht sein. Eine Kombination der genannten Verbindungsarten ist auch möglich. Die Querwände können insbesondere gesteckt, geklebt oder verschweisst sein.

Die Führungselemente können als Führungsrollen oder Gleitelemente ausgebildet sein. Die Gleitelemente können Gleitschuhe sein.

Der Begriff "Rollen" umfasst sämtliche Körper, welche geeignet sind, über eine Oberfläche abzurollen. Darunter fallen z. B. auch Räder und Kugeln.

Die Zwangsführung der Gravitationsdruckübertragungseinheiten kann bezüglich der Anordnung und Ausgestaltung der Führungselemente und der Führungsmittel auf unterschiedliche Weise ausgeführt sein.

So können die Führungsmittel beispielsweise wenigstens eine Führungsschiene umfassen, welche wenigstens eine Lauf- bzw. Gleitfläche für die Führungselemente ausbildet.

Ferner kann das Führungsmittel auch durch einen rohrförmigen Kanal ausgebildet sein, in welchem die Gravitationsdruckübertragungseinheiten verschiebbar geführt sind. Der rohrförmige Kanal bildet im Lastabschnitt zugleich auch den Wasserführungskanal aus. Das Führungselement kann hier beispielsweise durch das Anströmelement selbst ausgebildet werden.

Umfassen die Führungsmittel Führungsschienen, so enthalten die Gravitationsdruckübertragungseinheiten gemäss einer ersten Variante in Umlaufrichtung betrachtet jeweils zwei seitlich vom Anströmorgan angeordnete Führungselemente. Die Anlage enthält ferner im Lastabschnitt zwei jeweils seitlich am Wasserführungskanal, insbesondere in den Kanalseitenwänden, angeordnete Führungsschienen, wobei die Führungselemente entlang des Lastabschnitts in den Führungsschienen geführt sind.

Gemäss einer ersten Untervariante sind die Führungselemente bezüglich der geschlossenen Umlaufbahn seitlich am radial aussen liegenden Endabschnitt des Anströmorgans angeordnet. Die Führungsschiene ist seitlich im Bereich des bodenwärtigen Endabschnitts des Wasserführungskanals angeordnet.

Gemäss einer zweiten Untervariante sind die Führungselemente bezüglich der geschlossenen Umlaufbahn seitlich zwischen den radial aussen und innen liegenden Endabschnitten des Anströmorgans angeordnet. Die Führungsschienen sind seitlich im Bereich zwischen dem bodenwärtigen und dem öffnungsseitigen Endabschnitt des Wasserführungskanals in oder an der Kanalseitenwand angeordnet.

Gemäss einer dritten Untervariante sind die Führungselemente bezüglich der geschlossenen Umlaufbahn seitlich am radial innen liegenden Endabschnitt des Anströmorgans angeordnet. Die Führungsschienen sind seitlich im Bereich des öffnungsseitigen Endabschnitts des Wasserführungskanals angeordnet.

Gemäss einer zweiten Variante enthält die Anlage eine über dem Wasserführungskanal angeordnete Führungsschiene. Die Gravitationsdruckübertragungseinheit enthält überdies wenigstens ein über dem Anströmorgan angeordnetes Führungselement, welches im Bereich des Lastabschnittes in der Führungsschiene geführt ist. Die Ausbildung der Antriebsanordnung kann bezüglich des funktionellen Zusammenwirkens zwischen den einzelnen Gravitationsdruckübertragungseinheiten ebenfalls unterschiedlich sein.

Gemäss einer ersten Ausführungsform der Erfindung sind nun die Gravitationsdruckübertragungseinheiten nicht miteinander verbunden, d.h. verbindungstechnisch unabhängig voneinander ausgebildet.

Die Antriebsanordnung wird gemäss dieser Ausführungsform durch die Übertragung von Druckkräften zwischen den Gravitationsdruckübertragungseinheiten angetrieben. Die Gravitationsdruckübertragungseinheiten sind als Druckkörper ausgebildet und enthalten Kraftübertragungsorgane zur Übertragung von Druckkräften von einer in Umlaufrichtung nachlaufenden Gravitationsdruckübertragungseinheit auf eine, vorzugsweise unmittelbar, vorlaufende Gravitationsdruckübertragungseinheit.

Die Kraftübertragungsorgane können z. B. Druckflächen ausbilden, über welche die Druckkräfte zwischen den Gravitationsdruckübertragungseinheiten weiter gegeben werden. Auf diese Weise lässt sich die Antriebsanordnung ähnlich einer Antriebskette in Umlaufrichtung um die Umlenkorgane bewegen, ohne dass jedoch die Gravitationsdruckübertragungseinheiten miteinander verbunden sind.

Gemäss einer zweiten Ausführungsform der Erfindung ist die Antriebsanordnung als zusammenhängende Antriebsstruktur, ähnlich einer Antriebskette, mit einer Mehrzahl von zusammenhängenden Antriebsgliedern, ähnlich den Kettengliedern, ausgebildet, wobei die Antriebsglieder bevorzugt den Gravitationsdruckübertragungseinheiten entsprechen. Die Gravitationsdruckübertragungseinheiten enthalten Verbindungsorgane zum gelenkigen Verbinden benachbarter Gravitationsdruckübertragungseinheiten zu einer Antriebsstruktur. Jedes Antriebsglied enthält bevorzugt ein Anströmorgan.

Die Antriebsglieder der Antriebsstruktur können durch Übertragung von Zug-, Druck- oder einer Kombination von Zug- und Druckkräften in Umlaufrichtung angetrieben werden.

Jedes Antriebsglied kann in Umlaufrichtung betrachtet beidseitig an diesem angebrachte Führungselemente, insbesondere Führungsrollen, zum zwangsweisen Führen der Antriebsstruktur wenigstens im Bereich des Lastabschnittes entlang des Wasserführungskanals enthalten.

Im Weiteren kann jedes Antriebsglied in Umlaufrichtung betrachtet beidseitig an diesem angebrachte Verbindungsorgane zum gelenkigen Verbinden benachbarter Antriebsglieder zu einer Antriebsstruktur enthalten. Die Antriebsglieder sind insbesondere in einer Ebene parallel zur Bewegungsrichtung bzw. Umlaufbahn der Antriebsstruktur schwenkbar miteinander verbunden.

In einer besonders bevorzugten Ausführung der Erfindung sind die Führungselemente, insbesondere die Führungsrollen, am Verbindungsorgan angeordnet und über eine Verbindungsachse mit diesem verbunden. Die Verbindungsachse ist bevorzugt gleichzeitig als Verbindungselement zwischen den Antriebsgliedern ausgebildet. Die Verbindungsachsen nehmen dabei die Funktion eines Verbindungsbolzens war. Selbstverständlich kann die Verbindung zwischen den Antriebsgliedern auch unabhängig von der Anbindung der Führungselemente ausgebildet sein.

Gemäss einer besonderen Ausführungsform von Verbindungsorganen weist das Antriebsglied jeweils auf jeder Seite ein gabelförmiges Aufnahmeelement mit Gabellaschen, welche Durchbrüche zum Durchführen einer der Verbindungsachse entsprechenden Rollenachse aufweisen, auf. Ferner enthält das Antriebsglied einen in Bewegungsrichtung dem gabelförmigen Aufnahmeelement gegenüber liegenden Aufnahmekörper, z. B. in Form einer Lasche, mit einem Durchbruch zum Durchführen der Rollenachse auf.

Zur Herstellung der Verbindung zwischen zwei Antriebsgliedern wird nun auf beiden Seiten des Antriebsgliedes der Aufnahmekörper zwischen die Gabellaschen des gabelförmigen Aufnahmeelements des benachbarten Antriebsgliedes geschoben und die Rollenachse der Führungsrolle durch die Durchbrüche in den Gabellaschen und dem Aufnahmekörper geschoben.

Die Führungselemente, insbesondere die Führungsrollen, sind in Umlaufrichtung betrachtet bevorzugt jeweils ausserhalb des seitlichen Endes des Anströmorgan angeordnet. Die Führungselemente weisen ferner bevorzugt jeweils ein seitlich nach aussen zur Führungsschiene hin gerichtetes Seitenführungselement auf. Die Gravitationsdruckübertragungseinheiten, insbesondere die Antriebsglieder, sind über die Seitenführungselemente beidseitig quer zum Wasserführungskanal bewegbar.

Das Seitenführungselement ist bevorzugt kalottenformig bzw. als Führungskappe ausgebildet, und steht in einem Führungskontakt mit der Führungsschiene.

Die Führungsschiene ist bevorzugt als Profillängskörper zur führenden Aufnahme der Führungselemente ausgebildet. Der Profillängskörper enthält insbesondere einen Führungskanal. Die Führungsschiene bzw. der Führungskanal weist eine Lauffläche für die Führungselemente, z. B. eine Gleitfläche für die Gleitelemente oder eine Abrollfläche für die Führungsrollen, auch Laufrollen genannt, auf.

Der Führungskanal ist bevorzugt so ausgelegt, dass dieser an zwei einander gegenüber liegenden Seiten eine Gleit- bzw. Abrollfläche ausbildet.

Ferner bildet die Führungsschiene bzw. der Führungskanal bevorzugt auch eine quer zur Lauffläche liegende Führungsfläche für die Seitenführungselemente aus.

Der Führungskanal ist bevorzugt U- oder C-förmig ausgebildet und weist z. B. zwei Profilschenkel und eine Verbindungswand auf. Der Führungskanal ist zu den Führungselementen hin offen. Gemäss einer besonderen Ausführungsform ist der Führungskanal zum Wasserführungskanal hin offen.

Einer der Profilschenkel bildet z. B. die Lauffläche der Führungselemente aus. Die Verbindungswand zwischen den zwei Profilschenkeln bildet z. B. die Führungsfläche für das Seitenführungselement aus. Da die Gravitationsdruckübertragungseinheit bevorzugt zu beiden Seiten wenigstens ein Führungselement aufweist, ist entsprechend jeweils beidseitig von den Gravitationsdruckübertragungseinheiten eine Führungsschiene vorgesehen. Diese verlaufen bevorzugt parallel zueinander.

Gemäss einer besonderen Ausführungsvariante der Erfindung werden die Umlenkorgane durch Bogenabschnitte der Führungsschienen ausgebildet, welche die Führungsschiene im Last- und Rückführabschnitt miteinander verbinden. Auf diese Weise sind die Gravitationsdruckübertragungseinheiten auch im Umlenkbereich durch die Führungsschienen zwangsgeführt. Die Bogenstücke der Führungsschienen können auch Teil des Umlenkorgans sein, welches z. B. noch wie weiter unten beschrieben einen Drehkörper mit umfassen kann.

Werden zum Wasserführungskanal hin offene U- oder C-Führungsprofile verwendet, so weisen diese zwei einander gegenüber liegende Führungsflächen für die Führungselemente auf. Dadurch können die Gravitationsdruckübertragungseinheiten bzw. die Anströmorgane im Bereich des Lastabschnittes nicht durch den Wasserdruck nach oben weggedrückt bzw. angehoben werden.

Gemäss einer bevorzugten Weiterbildung der Erfindung enthält eines der Umlenkorgane, insbesondere das obere, im Einlaufbereich angeordnete Umlenkorgan, einen Drehkörper, insbesondere ein Antriebsrad, welches durch die Bewegung der teilumfänglich um den Drehkörper geführten Antriebsanordnung angetrieben wird. Die Antriebsanordnung steht z. B. in einem teilumfänglichen form- und/oder reibschlüssigen Eingriff mit dem Drehkörper, so dass dieser durch die Antriebsanordnung z. B. mit der Geschwindigkeit der Antriebsanordnung, angetrieben wird.

Wird das Umlenkorgan durch die Führungsschiene selbst ausgebildet, so ist der oben genannte sowie nachfolgend beschriebene Drehkörper dem Umlenkorgan zugeordnet. Drehkörper und Führungsschiene können auch definitionsgemäss gemeinsam das Umlenkorgan ausbilden, da beide Einrichtungen an der Umlenkung der Antriebsanordnung beteiligt sind.

Das Antriebsrad des Umlenkorgans weist z.B. entlang seines Umfanges angeordnete Antriebsvertiefungen auf, in welche Elemente der Gravitationsdruckübertragungseinheiten eingreifen und auf diese Weise das Antriebsrad antreiben. Diese Elemente können Verbindungselemente von Antriebsgliedern oder Rollenachsen von Führungsrollen sein.

Das besagte Umlenkorgan ist beispielsweise mit dem Stromerzeugungsgenerator gekoppelt. Der Generator kann direkt an die Drehachse des Drehkörpers gekoppelt sein. Ferner kann die Drehbewegung auch über ein Getriebe vom Drehkörper an den Generator übertragen werden.

Der mit dem oberen Umlenkorgan gekoppelte Stromerzeugungsgenerator wird dabei durch die Druck- und/oder Zugkraft der Gravitationsdruckübertragungseinheiten, insbesondere der Antriebsglieder angetrieben.

Der Stromerzeugungsgenerator kann auch Teil eines Schleppantriebes sein, bei welchem die Antriebsanordnung bzw. die bewegten Gravitationsdruckübertragungseinheiten im Lastabschnitt ein umlaufendes, flexibles Kraftübertragungsorgan antreiben, welches wiederum den Stromerzeugungsgenerator antreibt.

Gemäss einer besonderen Ausführungsform der Erfindung weist jenes Umlenkorgan, welchem kein Stromerzeugungsgenerator zugeordnet ist oder beide Umlenkorgane beidseitig von den Gravitationsdruckübertragungseinheiten angeordnete kurvenförmig verlaufende Führungsschienen auf, in welchen die Gravitationsdruckübertragungseinheiten über ihre Führungselemente zwangsgeführt und aus dem Lastabschnitt in den Rückführabschnitt oder umgekehrt umgelenkt werden.

Gemäss einer besonderen Ausführungsform der Erfindung sind die Gravitationsdruckübertragungseinheiten über ihre Führungselemente entlang der gesamten Umlaufbahn in Führungsschienen zwangsgeführt. Das heisst, die Anlage weist entlang der Umlaufbahn der Antriebsanordnung eine geschlossene Zwangsführung für die Gravitationsdruckübertragungseinheiten auf. Die geschlossene Zwangsführung kommt insbesondere bei Antriebsanordnungen zur Anwendung, bei denen die Gravitationsdruckübertragungseinheiten nicht miteinander verbunden, d.h. nicht miteinander verkettet sind.

Diese Ausführungsform weist den Vorteil auf, dass keine Kette aus miteinander verbundenen Gravitationsdruckübertragungseinheiten gespannt werden muss.

Das untere, dem Auslassbereich zugeordnete Umlenkorgan enthält bevorzugt kurvenförmig verlaufende Führungsschienen. Der bogenförmige Verlauf der Führungsprofile umfasst bevorzugt einen vom Lastabschnitt bzw. Rückführabschnitt in das Umlenkorgan einlaufenden Übergangsbogen, welcher als Klothoid ausgebildet ist.

Ein entlang eines Klothoid-Bogens geführter Körper zeichnet sich durch eine gleichmässige Winkeländerung aus, wodurch z. B. Querschläge im Umlenkbereich vermieden werden, welche bei einem Übergang von einem geraden Streckenabschnitt auf einen Kreisbogen entstehen. Ferner werden allgemein Querbeschleunigungen senkrecht zur Bewegungsbahn und insbesondere Beschleunigungsspitzen reduziert.

Der Krümmungsradius entlang des Klothoidbogens nimmt ausgehend vom geraden Streckenabschnitt zudem kontinuierlich ab.

Der Lastabschnitt und ggf. auch der Rückführabschnitt verlaufen bevorzugt in einer schiefen Ebene. Das heisst, die Anströmorgane werden in diesen Bereichen linear und mit konstantem Neigungswinkel zu einer horizontalen Ebene fortbewegt. Es ist jedoch auch denkbar, dass der Neigungswinkel im Bereich des Lastabschnittes und/oder Rückführabschnittes variabel ist. Der Wasserführungskanal und entsprechend auch der Lastabschnitt können auch in mehrere Kanalabschnitte bzw. Lastteilabschnitte gegliedert sein, welche verglichen mit den benachbarten Abschnitten jeweils unterschiedliche Neigungswinkel aufweisen.

Der Wasserführungskanal verläuft zwischen dem oberen und unteren Umlenkorgan bevorzugt parallel zu der oder den Führungsschienen. Der Wasserführungskanal liegt daher bevorzugt ebenfalls in einer schiefen Ebene. Der Neigungswinkel α der schiefen Ebene ist grösser 0°: Ferner ist der Neigungswinkel α kleiner oder gleich 90° (Winkelgrade). Bevorzugt ist der Neigungswinkel grösser 10° und insbesondere grösser 20°. Ferner ist der Neigungswinkel bevorzugt kleiner 80° und insbesondere kleiner 70°. Besonders bevorzugt liegt der Neigungswinkel in einem Bereich von 30° bis 60°.

Die Anlage, insbesondere die Antriebsanordnung und die Umlenkorgane, sind bevorzugt in einem Gestell montiert. Das Gestell und die Montage der Betriebskomponenten sind bevorzugt so ausgelegt, dass die Neigung der Antriebsanordnung bzw. des Lastabschnittes sowie ggf. auch die Länge des Lastabschnittes einstellbar und somit für verschiedene Kanalgefälle und Kanallängen anpassbar ist.

Die Anlage kann ferner einen Entlastungskanal vorsehen, welcher zum Beispiel unterhalb des Wasserführungskanals geführt ist. Der über einen Zuführkanal dem Wasserführungskanal zugeführte Wasserstrom kann hierdurch teilweise oder vollständig, unter Umgehung des Einlaufbereichs in den Entlastungskanal umgeleitet werden. Hierzu ist ein ansteuerbares Leitorgan vorgesehen, welches den Zufluss in den Entlastungskanal bzw. in den Einlaufbereich steuert.

Es ist auch möglich, dass die Antriebsanordnung zusammen mit den dieser zugeordneten Schienenführung und den Umlenkorganen mittels einer Hebemechanik über eine Steuerung aus dem Wasserführungskanal angehoben werden kann. Das Anheben der genannten Organe kann aus sicherheitstechnischen Gründen, z. B. zum Schutz der Anlage bei Hochwasser, oder zu Revisionszwecken vorgesehen sein.

Die Erfindung betrifft auch ein Verfahren zum Betrieb der erfindungsgemässen Anlage. Hierzu wird in einem höher gelegenen Einlaufbereich Wasser in den geneigten Wasserführungskanal der Anlage eingelassen. Anströmorgane werden durch das obere Umlenkorgan in einer bogenförmigen, insbesondere kreisförmigen Bewegungsbahn aus dem Rückführabschnitt in den Einlaufbereich geführt und tauchen in den Wasserführungskanal ein.

Während des Eintauchvorganges fliesst Wasser von einem Zuführkanal in den Wasserführungskanal ein und strömt das eintauchende Anströmorgan an. Das anströmende Wasser wird so in die sich gleichzeitig ausbildenden Wasseraufnahmeabteile eingeleitet. Das Wasser wird hierbei in den Wasseraufnahmeabteilen gehalten. D. h., das Wasser kann nicht frei den Wasserführungskanal hinunter fliessen.

Das in den Aufnahmeabteilen gefasste Wasser treibt die Anströmorgane durch dessen Potentialgefälle, also Schwerkraft bedingt, entlang des Wasserführungskanals in Richtung des unteren Umlenkorgans bzw. Auslassbereichs an. Am unteren Umlenkorgan werden die Anströmorgane über eine bogenförmige oder sogar teilkreisförmige Bewegungsbahn wieder aus dem Lastabschnitt und entsprechend aus dem Wasserführungskanal ausgeschwenkt, so dass das mitgeführte Wasser im Auslassbereich aus den Wasseraufnahmeabteilen freigegeben wird und abgeführt werden kann.

Selbstverständlich können fallweise zwischen dem oberen und unteren Umlenkorgan noch weitere Umlenkorgane vorgesehen sein.

Das Funktionsprinzip dieser Anlage unterscheidet sich von anderen Anlagen dadurch, dass die Anströmorgane und dementsprechend die Antriebsanordnung durch die Gewichtskraft des Wassers in den Wasseraufnahmeabteilen, also durch deren Gravitationsdruck, angetrieben wird.

Der Auslassbereich kann derart ausgestaltet sein, dass das Wasser vertikal oder im wesentlichen vertikal nach unten austreten kann. So kann hierzu im Auslassbereich eine Art Schachtöffnung ausgebildet sein. Dadurch wird verhindert, dass Restwasser durch die Anströmorgane in die Umlenkung am unteren Umlenkorgan mitgenommen, hoch geführt und dadurch der Wirkungsgrad der Anlage reduziert wird.

Die Anlage wird leistungsvariabel betrieben, wobei die Umlaufgeschwindigkeit der Zuflussgeschwindigkeit des Wassers angepasst werden kann.

Die Anlage wird dabei so geregelt, dass sich die Antriebsanordnung bei konstanten Zuflussmengen mit konstanter Geschwindigkeit bewegt.

Es kann ferner vorgesehen sein, dass, z. B. je nach Leistungsbedarf, der Neigungswinkel verändert werden kann.

Die erfindungsgemässe Wasserkraftanlage findet überall dort Anwendung, wo Wasser einen Höhenunterschied durchströmen muss. Dies können z. B. Fliessgewässer oder Auslässe von Stauanlagen sein. Da die behördlichen Auflagen für Bauten in Fliessgewässern sehr streng sein können, eignet sich der Einsatz der erfindungsgemässen Anlage insbesondere bei bereits bestehenden hydrotechnischen Bauwerken oder anderen industriellen Anlagen.

So findet die Anlage beispielsweise Einsatz bei Kläranlagen, z. B. bevor das gereinigte Wasser in ein Gewässer entlassen wird, oder in Industrieanlagen, in welchen grössere Mengen Brauchwasser für Prozesse umgesetzt werden. Die erfindungsgemässe Anlage eignet sich bereits für Fallhöhen von 2 bis 20 m.

Die Zwangsführung der Gravitationsdruckübertragungseinheit im Lastabschnitt erlaubt eine exakte Ausrichtung der Anströmorgane im Wasserführungskanal. Daher können die vorzugsweise berührungsfrei im Wasserführungskanal geführten Anströmorgane mit vergleichsweise geringen Toleranzen gegenüber dem Wasserführungskanal ausgelegt werden.

Die Erfindung wird nachfolgend anhand von Figuren näher erläutert. Die Figuren zeigen lediglich einige besondere Ausführungsformen und Weiterentwicklungen, welche keinesfalls als abschliessend zu betrachten sind. Es zeigen:
- Figur 1:: eine perspektivische Ansicht einer erfindungsgemässen Anlage;
- Figur 2a:: eine perspektivische Ansicht einer Gravitationsdruckübertragungseinheit;
- Figur 2b:: eine perspektivische Ansicht von Gravitationsdruckübertragungseinheiten;
- Figur 3:: eine frontale Ansicht einer in einer Führungsschiene geführten Gravitationsdruckübertragungseinheit;
- Figur 4a:: eine weitere perspektivische Ansicht einer Gravitationsdruckübertragungseinheit;
- Figur 4b:: einen vergrösserten Ausschnitt des Verbindungsorgans einer Gravitationsdruckübertragungseinheit gemäss Figur 4a;
- Figuren 5a und 5b:: eine Seitenansicht einer erfindungsgemässen Anlage im Einlaufbereich gemäss einer ersten Ausführungsform;
- Figuren 6a und 6b:: eine Seitenansicht einer erfindungsgemässen Anlage im Einlaufbereich gemäss einer zweiten Ausführungsform;
- Figur 7a:: eine perspektivische Ansicht der Umlenkorgane mit Führungsschienen gemäss einer ersten Ausführung;
- Figur 7b:: eine perspektivische Ansicht der Umlenkorgane mit Führungsprofilen gemäss einer zweiten Ausführung;
- Figur 8:: perspektivische Ansicht einer Wasserkraftanlage mit mehreren Anlagen gemäss Figur 1;
- Figur 9a bis: 9c: verschiedene Ansichten einer einzelnen in einem Wasserführungskanal geführten Gravitationsdruckübertragungseinheit;
- Figur 10:: eine perspektivische Teilansicht einer weiteren Ausführungsform einer erfindungsgemässen Anlage mit geschlossener Führungsschiene und mit einer Antriebseinheit;
- Figur 11:: eine Querschnittsansicht einer weiteren Ausführungsform einer Gravitationsdruckübertragungseinheit;
- Figur 12:: eine Querschnittsansicht einer weiteren Ausführungsform einer Gravitationsdruckübertragungseinheit;
- Figur 13:: eine schematische Querschnittsansicht einer weiteren Ausführungsform der erfindungsgemässen Anlage;
- Figur 14:: eine schematische Querschnittsansicht einer weiteren Ausführungsform der erfindungsgemässen Anlage;
- Figur 15:: eine schematische Querschnittsansicht einer weiteren Ausführungsform der erfindungsgemässen Anlage;
- Figur 16:: eine Draufsicht des Einlaufbereichs einer weiteren Ausführungsform der erfindungsgemässen Anlage;
- Figur 17:: eine schematische Querschnittsansicht aus dem Ablassbereich gemäss einer Weiterbildung der Anlage nach Figur 14;
- Figur 18:: eine schematische Querschnittsansicht aus dem Ablassbereich einer weiteren Ausführungsform einer erfindungsgemässen Anlage.

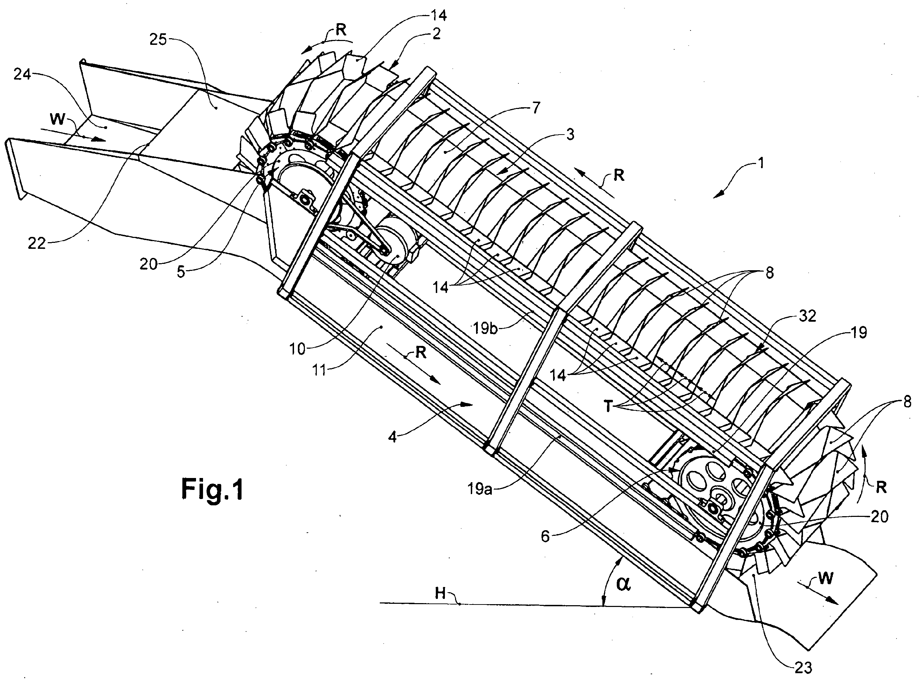

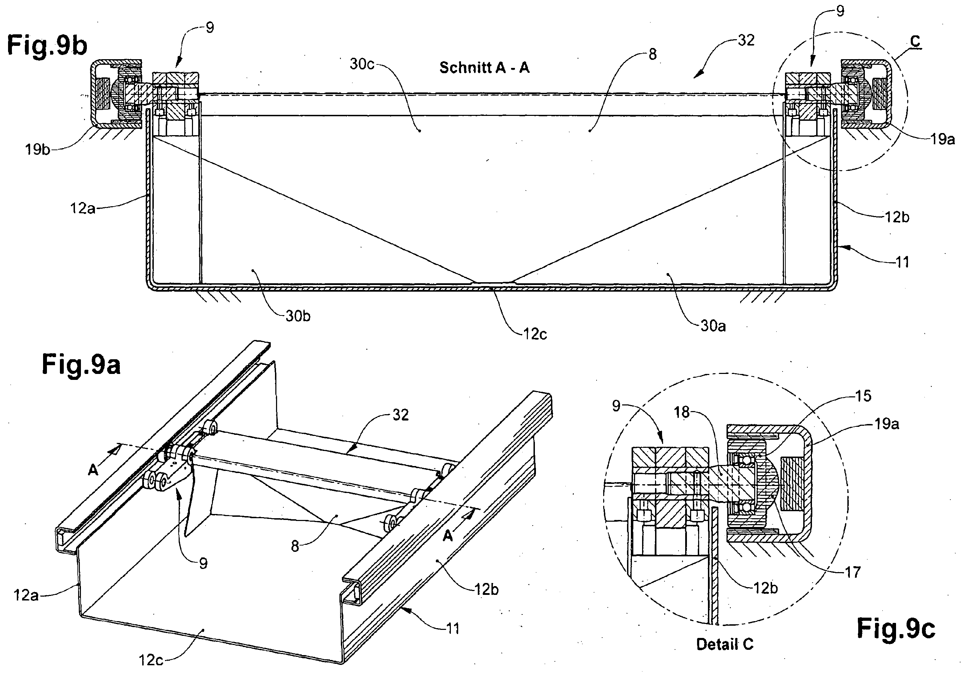

Die erfindungsgemässe Anlage 1 gemäss Figur 1 zeigt eine, entlang einer Umlaufrichtung R um ein oberes Umlenkorgan 5 und ein unteres Umlenkorgan 6 geführte Antriebsanordnung 2 in Form einer zusammenhängenden Antriebsstruktur 7. Die Antriebsstruktur 7 weist einen entlang eines Wasserführungskanals 11 (siehe auch Figur 9b) zwangsgeführten Lastabschnitt 4, z. B. in Form eines Lasttrums, und einen oberhalb und parallel zu diesem geführten Rückführabschnitt 3, z.B. in Form eines Rücktrums, auf.

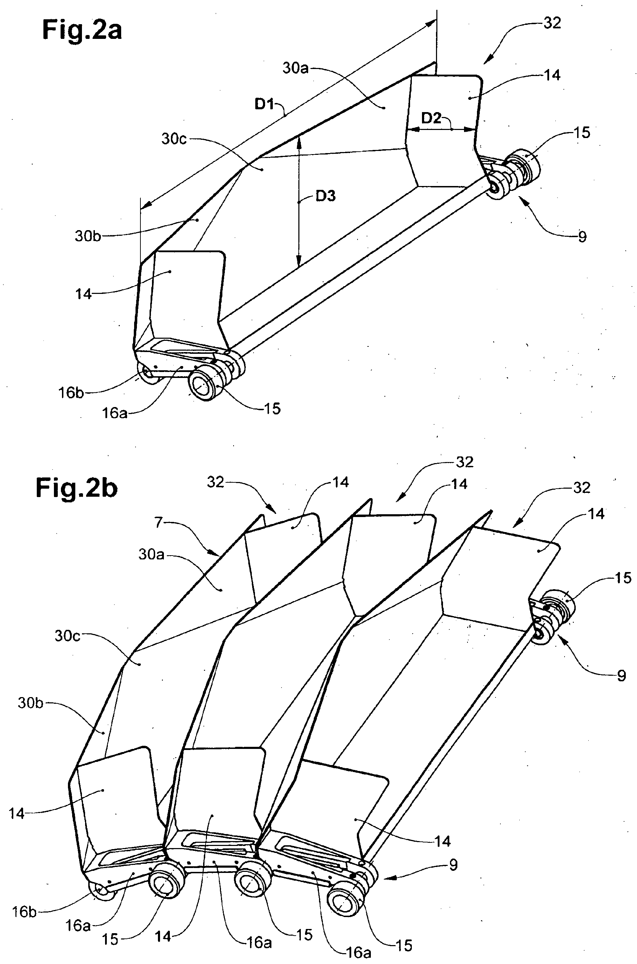

Die Antriebsstruktur 7 wird in Umlaufrichtung R angetrieben. Die Antriebsstruktur 7 ist aus einer Mehrzahl von Gravitationsdruckübertragungseinheiten 32, welche als Antriebsglieder 9 vorliegen (siehe Figur 2a 2b), gebildet. Die Antriebsglieder 9 beinhalten jeweils ein Anströmorgan 8, das längs des Lastabschnitts 4 quer in den Wasserführungskanal 11 eingreift.

Die Anströmorgane 8 (siehe Figur 2a, 2b) sind als schaufelförmige Wandelemente ausgebildet und weisen zwei seitlich angeordnete Wandabschnitte 30a, 30b auf, welche entgegen der Bewegungsrichtung R der Antriebsstruktur 7 aus der Ebene des Anströmorgans 8 gekrümmt bzw. weggebogen sind. Der Krümmungswinkel kann z. B. 10 - 30° betragen. Die Wandabschnitte 30a, 30b begrenzen einen flächigen, mittleren Wandabschnitt 30c. Das Anströmorgan 8 weist eine Breite von D1 auf, welche durch die Spalttoleranz kleiner ist als die Kanalbreite. Ferner weist das Anströmorgan eine Höhe D3 und eine Tiefe D2 auf.

Zwei benachbarte Anströmorgane 8 bilden zusammen mit den dem Kanalboden 12c sowie den beiden seitlichen Kanalwänden 12a, 12b jeweils ein so genanntes Wasseraufnahmeabteil 13 aus, wobei der Kanalboden 12c und die seitlichen Kanalwände 12a, 12b vorzugsweise ortsfest sind. (siehe Figur 1, 5a, 5b, 6a, 6b und 9a - 9c). Die Anströmorgane 8 sind zwar berührungsfrei zum Wasserführungskanal 11 geführt, doch bilden diese zu den Kanalwänden 12a-12c dank der exakten Führung der Antriebsglieder 9 einen vergleichsweise kleinen Spalt aus, durch welchen lediglich ein geringfügiger Wasserverlust aus den Wasseraufnahmeabteilen 13 auftritt.

Das Anströmorgan 8 beinhaltet ferner zwei seitlich, aussermittig angeordnete Versteifungselemente 14 in Form von Querwänden. Die Querwände 14 stellen jedoch nicht den seitlichen Abschluss der Wasseraufnahmeabteile 13 dar, welche, wie oben beschrieben, seitlich durch die beiden seitlichen Kanalwände 12a, 12b abgeschlossen werden.

Jedes Antriebsglied 9 enthält ferner zwei seitlich vom Anströmorgan 8 angeordnete Führungsrollen 15. Das Anströmorgan 8 umfasst überdies ein Verbindungsorgan in Form eines gabelförmigen Verbindungselementes 16a und eines diesem in Bewegungsrichtung R gegenüber liegenden Verbindungskörpers 16b, welche beide mit entsprechenden Durchbrüchen zur Aufnahme der Rollenachse 18 der Führungsrollen 15 versehen sind.

Zur Herstellung der zusammenhängenden Antriebsstruktur 7, werden die Antriebsglieder 9 beidseitig mit ihren jeweiligen Verbindungskörpern 16b in die Öffnung zwischen den Gabellaschen des gabelförmigen Verbindungselementes 16a geschoben, wobei die Rollenachse 18 sowohl durch die Durchbrüche in den Gabellaschen als auch im Aufnahmekörper 16b geschoben wird. Gleichzeitig wird auch die Führungsrolle 15 über die Rollenachse 18 am Antriebsglied 9 bzw. an der Antriebsstruktur 7 befestigt. Es ist hierbei anzumerken, dass die Antriebsglieder 9 bzw. die Antriebsstruktur 7 keine quer zur Bewegungsrichtung R durchgängigen Achselemente benötigt.

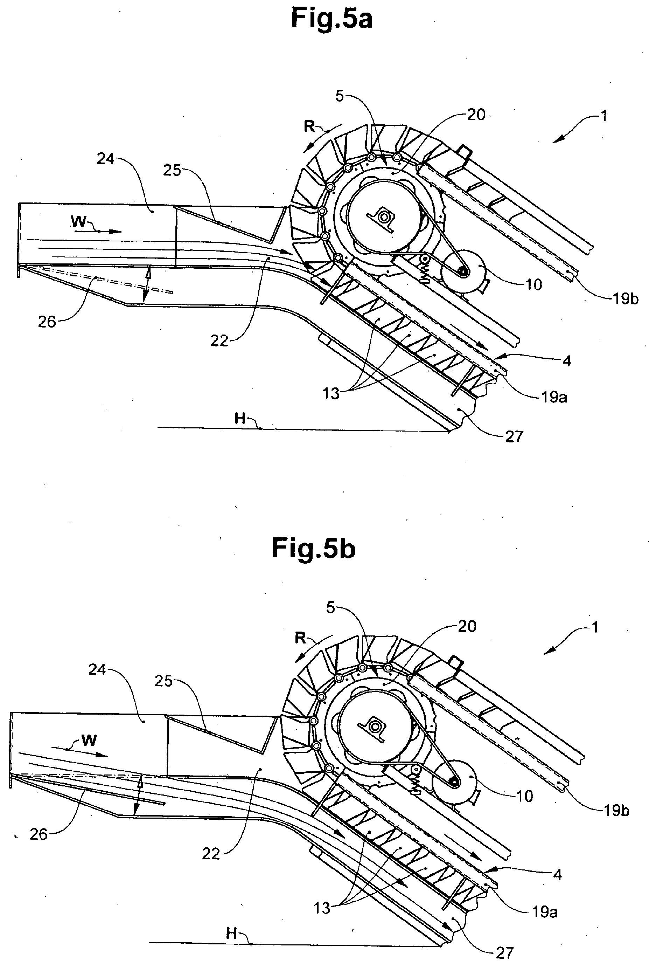

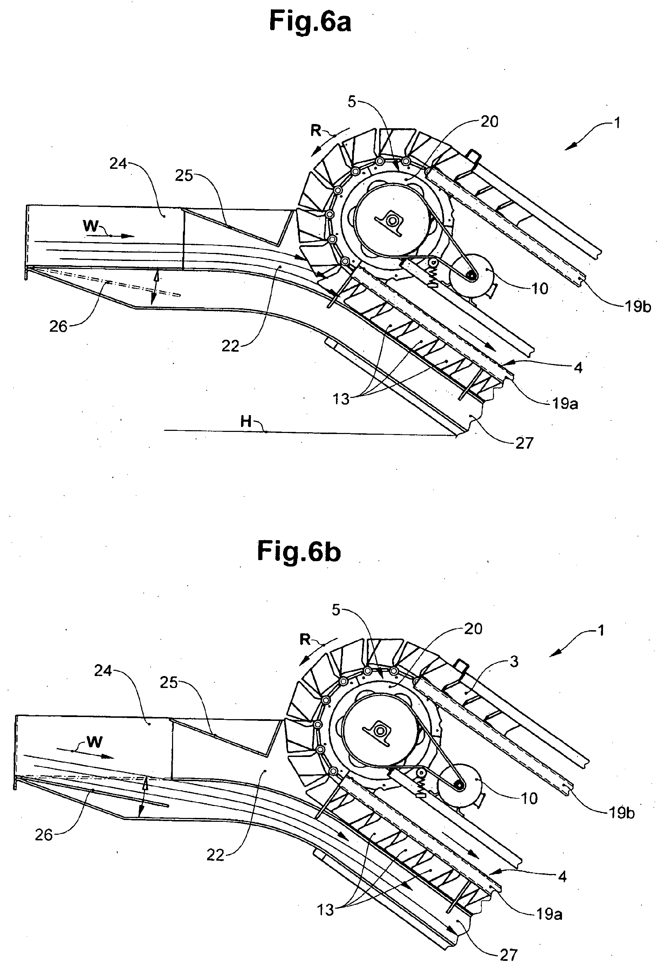

Der Wasserführungskanal 11 sowie der Lastabschnitt 4 liegen in einer schiefen Ebene mit einem konstanten Gefälle und verlaufen überdies parallel zueinander. In einem oberen Einlaufbereich 22 (siehe auch Figur 5a, 5b, 6a, 6b) wird das Wasser W aus einem Zuführkanal 24 dem Wasserführungskanal 11 zugeführt. In einem unteren Auslassbereich 23 verlässt das aus den Wasseraufnahmeabteilen 13 freigegebene Wasser W die Anlage 1.

Der Einlaufbereich 22 enthält ein Durchgangsbegrenzungsorgan 25. Mit dem Durchgangsbegrenzungsorgan 25 lässt sich über entsprechende Steuerungsmittel die Grösse der Durchlassöffnung und somit die dem Wasserführungskanal 11 zugeführte Wassermenge steuern. Es kann jedoch auch vorgesehen sein, dass die Durchlassöffnung im Voraus festgelegt und während des Betriebes der Anlage 1 nicht veränderbar ist.

Die Anlage enthält ferner einen Entlastungskanal 27, welcher unterhalb des Wasserführungskanals 11, und vorzugsweise parallel zu diesem verläuft, wie in den Figuren 5a, 5b und 6a, 6b dargestellt. Der Zugang zum Entlastungskanal 27 wird über ein Wasserleitorgan 26, welches eine Öffnungsklappe oder ein Öffnungsschieber bzw. ein Schott sein kann, gesteuert.

Der Wasserfluss W kann über die Stellung des Wasserleitorgans 27 in den Wasserführungskanal 11 oder in den Entlastungskanal 27 geleitet werden. Das Wasserleitorgan 26 wird ebenfalls über eine Steuerungseinrichtung angesteuert. Die Ableitung den Wasserflusses W über den Entlastungskanal 27 geschieht zum Beispiel dann, wenn die Anlage, z. B. für Unterhaltszwecke, ausser Betrieb genommen werden muss.

Ferner kann bei einem hohen Wasseraufkommen, ein Teil des Wassers über den Entlastungskanal 27 abgeleitet werden. Das Wasserleitorgan 26 kann auch allgemein zur Regulierung des Wasserzuflusses in den Einlaufbereich dienen, um so z. B. eine konstante Umlaufgeschwindigkeit der Antriebsstruktur zu gewährleisten.

Im Weiteren kann das Wasser oder ein Teil davon auch über den Entlastungskanal 27 abgeleitet werden, wenn Fremdstoffe, wie z. B. Feststoffe, im Wasser enthalten sind, welche die Funktion der Anlage 1 beeinträchtigen könnten. Wie bereits erwähnt, ist es auch möglich, dass lediglich ein Teil des Wassers über den Entlastungskanal 27 abgeleitet wird.

Das Wasserleitorgan 26 ist gemäss dem gezeigten Ausführungsbeispiel eine Öffnungsklappe im Boden des Zuführkanals 24. Auf diese Weise können z. B. schwere Feststoffe über den Entlastungskanal 27 gezielt aus dem Wasserstrom W ausgeschieden werden während die Anlage in Betrieb ist. In den Darstellungen nach Figur 5a und 6a ist das Leitorgan 26 so gestellt, dass der Wasserstrom dem Wasserführungskanal 11 zugeführt wird, während in den Figuren 5b und 6b das Leitorgan 26 so gestellt ist, dass der Wasserstrom dem Entlastungskanal 27 zugeführt wird.

Die Anströmorgane 8 werden über das obere Umlenkorgan 5 in den Einlaufbereich 22 geführt, wobei diese im Einlaufbereich 22 aus einer Kurvenbahn am Umlenkorgan 5 in eine lineare Bewegungsbahn entlang des im Einlaufbereich 22 beginnenden, ebenfalls linearen Wasserführungskanals 11 überführt werden.

Der Lastabschnitt 4 liegt dabei in der linearen Bewegungsbahn der Anströmorgane 8. Gleichzeitig werden im Einlaufbereich 22 auch die Wasseraufnahmeabteile 13 ausgebildet. Dies Geschieht durch die Zusammenführung der Anströmorgane 8 mit dem Wasserführungskanal 11, d.h. durch Eintauchen der Anströmorgane 8 in den Wasserführungskanal 11.

Der Wasserstrom W wird im Zuführkanal 24 horizontal oder mit leichtem Gefälle dem Einlaufbereich 22 zugeführt, wo dieser dann in das stärkere Gefälle des Wasserführungskanals 11 geleitet wird. D.h., an den Zuführkanal 24 schliesst im Einlaufbereich 22 der geneigte Wasserführungskanal 11 an. Der Wasserführungskanal 11 sowie der Lastabschnitt 4 weisen gegenüber einer Horizontalen H einen Neigungswinkel α auf.

Die Figuren 5 und 6 unterscheiden sich nun in der Führung der Anströmorgane 8 im Einlaufbereich 22. Gemäss der Ausführungsvariante nach Figur 5 sind der Einlaufbereich 22 und die Führung der Anströmorgane 8 im Einlaufbereich 22 so ausgestaltet, dass jeweils nur ein einziges, sich formendes Wasseraufnahmeabteil 13 im Einlaufbereich 22 mit Wasser W beschickt wird. Das heisst, die Befüllung eine sich formenden Wasseraufnahmeabteils 13 mit Wasser beginnt erst, wenn das dazugehörige, vorlaufende Anströmorgan 8 bis zu seiner Endposition in den Wasserführungskanal 11 eingetaucht ist und das vorlaufende Wasseraufnahmeabteil 13 verschliesst.

Gemäss der Ausführungsvariante nach Figur 6 sind der Einlaufbereich 22 und die Führung der Anströmorgane 8 im Einlaufbereich 22 so ausgestaltet, dass jeweils zwei, sich formende Wasseraufnahmeabteile 13 im Einlaufbereich 22 gleichzeitig mit Wasser W beschickt werden. In diesem Fall beginnt die Befüllung eines sich formenden Wasseraufnahmeabteils 13 mit Wasser bereits bevor das dazugehörige, vorlaufende Anströmorgan 8 in seine Endposition in den Wasserführungskanal 11 eingetaucht ist, so dass das vorlaufende Wasseraufnahmeabteil 13 noch nicht vollständig geschlossen ist. D.h., der Spalt zwischen dem Kanalboden 12c und dem Anströmorgan 8 hat noch nicht seine minimale Distanz erreicht.

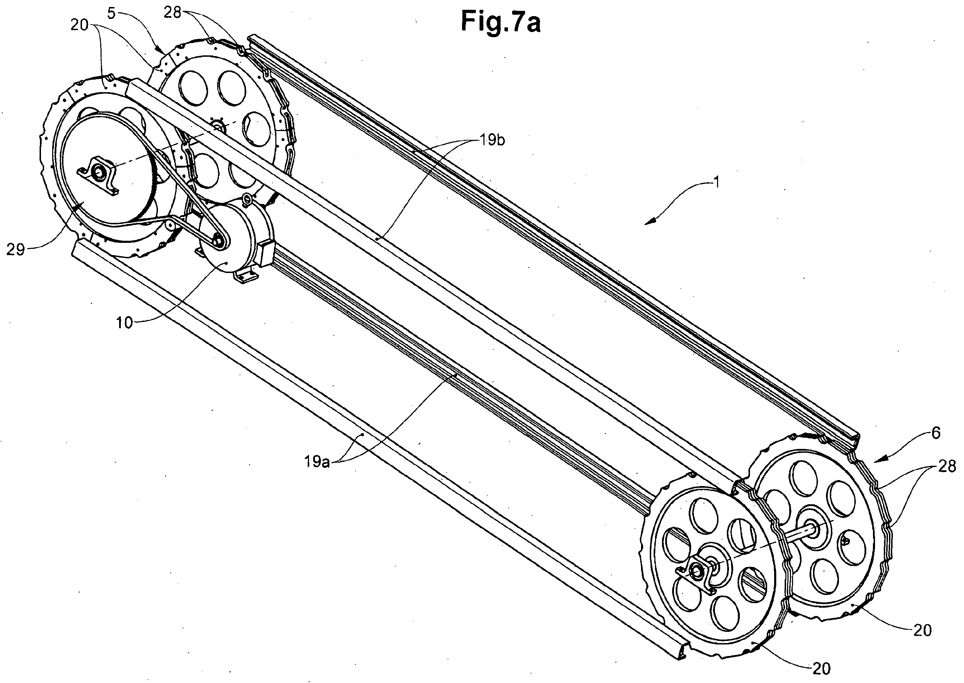

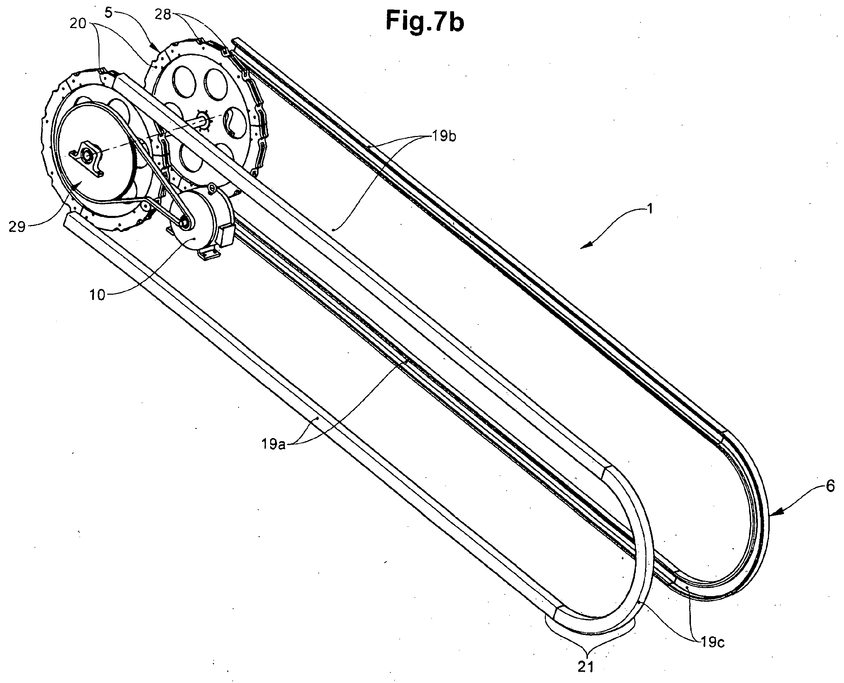

In den Figuren 7a und 7b ist jeweils eine besondere Ausführungsform eines unteren Umlenkorgans 6 dargestellt. Gemäss der Ausführungsform nach Figur 7a umfassen sowohl das obere als auch das untere Umlenkorgan 5, 6 einen Drehkörper 20 in Form von zwei über eine Drehachse gekoppelten, seitlich angeordneten Antriebsräder mit Antriebsvertiefungen 28 entlang ihres Umfanges. Das Antriebsrad 20 mit den umfänglichen Vertiefungen oder Erhebungen, wie z. B. Zähne, übt die Funktion eines Zahnrades aus.

Die Leistung zur Erzeugung elektrischer Energie wird vom oberen Umlenkorgan 5 abgenommen. Das obere Umlenkorgan 5 steht hierzu in Wirkverbindung mit einem Stromerzeugungsgenerator 10, welcher mittels einer Getriebeeinrichtung 29 kinetische Energie aus der Drehbewegung der Antriebsstruktur 7 am Antriebsrad 20 abnimmt und in elektrische Energie umwandelt.

Zwischen den Umlenkorganen 5, 6 ist jeweils ein unteres und oberes Paar von parallel verlaufenden Führungsprofilen 19a, 19b angeordnet, welche die seitliche Führung der Antriebsglieder 9 im unten liegenden Lastabschnitt 4 und im oben liegenden Rückführabschnitt 3 ausbilden. Die Führungsprofile 19a, 19b sind beispielsweise als U-Profile ausgebildet, welche jeweils zum Antriebsglied 9 hin offen sind. Sie sind seitlich vom Wasserführungskanal 11 oberhalb bzw. im Bereich des oberen Endabschnitts der Kanalseitenwände 12a, 12b angeordnet und mit einer Stützeinrichtung oder direkt oder indirekt mit dem Wasserführungskanal 11 verbunden.

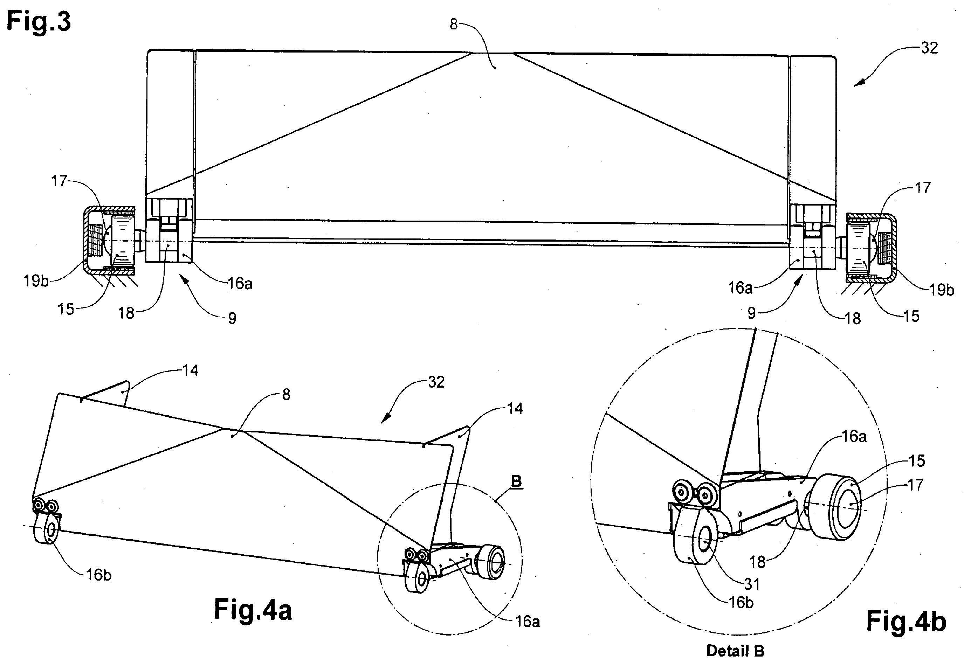

Die Führungsrollen 15 der Antriebsglieder 9, wie in Figur 3 bzw. 9 gezeigt, greifen beidseits seitlich in das U-förmige Führungsprofil 19a, 19b ein und rollen entlang den Laufflächen am Führungsprofil 19a, 19b ab. Die Führungsrollen 15 weisen eine Abrollfläche aus Kunststoff, wie POM (Polyoxymethylen), auf. Ferner besteht auch die Lauffläche am Führungsprofil 19a, 19b aus Kunststoff, wie z. B. POM. Auf diese Weise wird ein geräusch- und reibungsarmes Laufverhalten der Führungsrollen 15 gewährleistet.

Die Führungsrollen 15 sind über gekapselte Lager, z. B. Kugellager, reibungsarm gelagert. Die Führungsrollen 15 weisen ferner jeweils seitlich nach aussen zum Führungsprofil 19a, 19b hin gerichtete, kalottenförmige Seitenführungselemente 17 auf, über welche die Antriebsglieder 9 jeweils axial geführt sind. Die Seitenführungselemente 17 wie auch die korrespondierende Führungsfläche am Führungsprofil 19a, 19b sind bevorzugt aus Kunststoff, wie z. B. POM. Der Kunststoff zeichnet sich durch seine guten Gleiteigenschaften und sein geringes Wasseraufnahmevermögen aus.

Die in den Führungsprofilen 19a, 19b geführten Führungsrollen 15 der Antriebsglieder 9 verlassen jeweils beim Einlauf in das untere bzw. obere Umlenkorgan 5, 6 das dazugehörige Führungsprofil 19a, 19b, wobei gleichzeitig die Antriebsglieder 9 mit ihren Rollenachsen 18 in die Antriebsvertiefungen 28 zu liegen kommen. Durch diese Art von Formschluss wird der Drehkörper 20 von der Antriebsstruktur 7 angetrieben, wobei die Antriebsstruktur 7 gleichzeitig optimal geführt ist. Im konkreten Ausführungsbeispiel kommt der seitlich ausserhalb vom gabelförmigen Verbindungselement 16a liegende, freie Achsabschnitt in die Antriebsvertiefung 28 zu liegen.

Die Ausführungsform nach Figur 7b unterscheidet sich nun von der oben beschriebenen Ausführungsform nach Figur 7a dadurch, dass das untere Umlenkorgan 6 zur gerührten Umlenkung der Antriebsstruktur 7 keinen Drehkörper sondern ein gekrümmtes Führungsprofil 19c mit bogenförmiger Führungsbahn aufweist. Das gekrümmte Führungsprofil 19c verbindet das untere Führungsprofil 19a des Lastabschnitts 4 mit dem oberen Führungsprofil 19b des Rückführabschnitt 3.

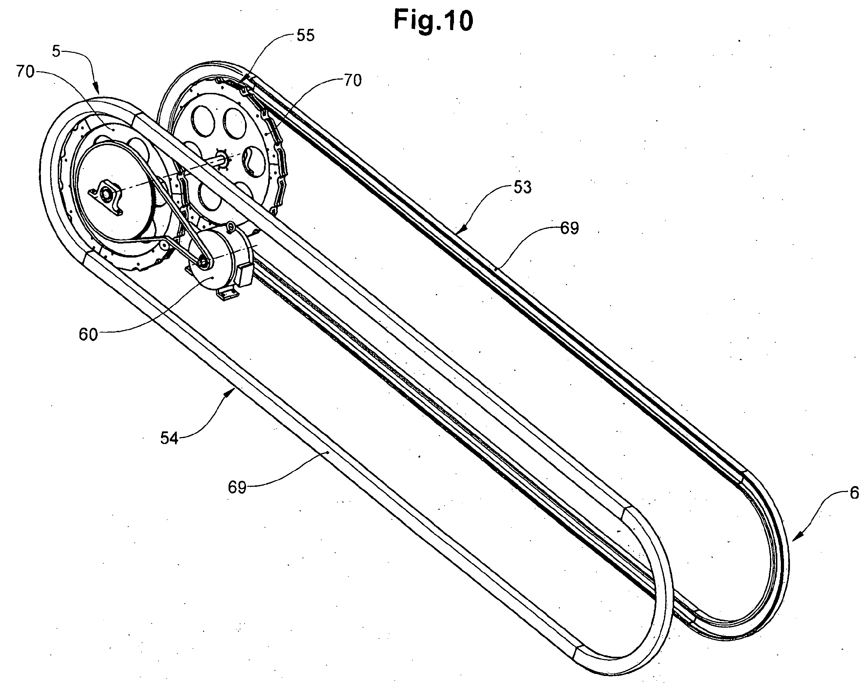

Die Antriebsglieder 9 der Antriebsstruktur 7 werden auf diese Weise entlang der bogenförmigen Führungsbahn vom Lastabschnitt 4 in den Rückführabschnitt 3 geführt. Der Übergangsbogen 21 vom Lastabschnitt 4 in die gekrümmte Führungsbahn des unteren Umlenkorgans 6 kann als Klothoid ausgebildet sein. Selbstverständlich können die Umlenkorgane 5, 6 sowohl Drehkörper mit Vertiefungen zur Aufnahme der Rollenachsen als auch ein gekrümmtes Führungsprofil mit bogenförmiger Führungsbahn enthalten, so dass die Antriebsstruktur 7 sowohl über die Führungsrollen im Führungsprofil als auch über die Drehachsen in den Vertiefungen des Antriebsrades geführt ist (siehe Figur 10).

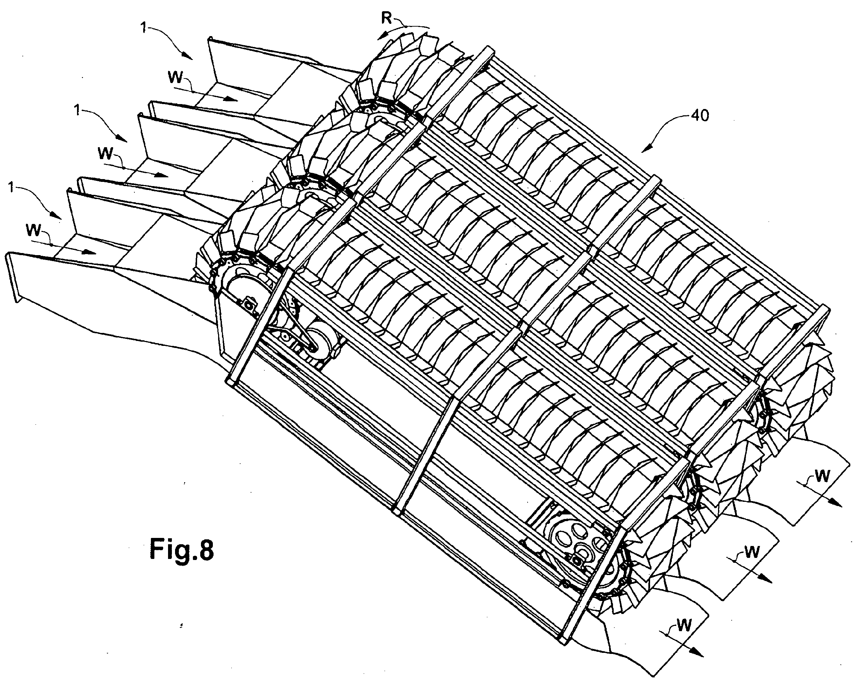

Die erfindungsgemässe Anlage eignet sich insbesondere auch für einen modularen Aufbau einer Wasserkraftanlage. So können beispielsweise mehrere, oben beschriebene erfindungsgemässe Anlagen, wie in Figur 8 beispielhaft dargestellt, nebeneinander angeordnet sein und auf diese Weise zu einer Wasserkraftanlage 40 kombiniert werden. Ferner können auch mehrere erfindungsgemässe Anlagen alternativ oder in Kombination zur vorgenannten parallelen Anordnung hintereinander, d.h. in Serie angeordnet sein.

Je nach Wasseraufkommen können beispielsweise einzelne Anlagen 1 zugeschaltet oder abgeschaltet werden. Dies geschieht über die Steuerung der Wasserzufuhr in die einzelnen Einlaufbereiche.

Die in Figur 10 gezeigte perspektivische Teilansicht einer besonderen Ausführungform einer erfindungsgemässen Anlage weist zwei voneinander beabstandete, parallel zueinander verlaufende Führungsschienen 69 auf, welche entlang einer Umlaufbahn eine geschlossene Führung ausbilden. Die Führungsschienen 69 weisen in einem Last- und Rückführabschnitt 54, 53 jeweils einen geneigten und geraden Führungsabschnitt auf.

Die Führungsschienen 69 sind in einem oberen und unteren Umlenkbereich als bogenförmige Umlenkorgane 5, 6 ausgebildet, welche die Gravitationsdruckübertragungseinheiten aus dem Rückführabschnitt in den Lastabschnitt und umgekehrt umlenken. Die besagten Bogenstücke verbinden die geraden Führungsabschnitte der Führungsschienen im Last- und Rückführabschnitt 54, 53 jeweils zu einer geschlossenen Führungsbahn. Hieraus ergibt sich eine Zwangsführung.

Die Führungsschienen umfassen beispielsweise einen U-förmigen Profillängskörper. Die U-förmigen Profillängskörper der Führungsschienen 69 sind zueinander hin offen. Die Gravitationsdruckübertragungseinheiten (nicht gezeigt) sind nun zwischen den beiden Führungsschienen 69 angeordnet und über entsprechende Führungselemente in den Führungsschienen 69 geführt.

Im oberen Umlenkbereich sind die Führungsschienen 69 mit ihren bogenförmigen Abschnitten um den bzw. entlang des Umfangs eines Drehkörpers 55 geführt. Der Drehkörper 55 weist zwei voneinander beabstandete und über eine Drehachse miteinander verbundene Antriebsräder 70 auf.

Die Antriebsräder 70 weisen entlang ihres Umfanges angeordnete Antriebsvertiefungen auf, in welche die Gravitationsdruckübertragungseinheiten eingreifen (nicht gezeigt) und auf diese Weise den Drehkörper 55 antreiben.

Der Drehkörper 55 ist zwecks Abnahme von Leistung mit einem Stromerzeugungsgenerator 60 gekoppelt. Der Drehkörper 55 und damit der Stromerzeugungsgenerator 60 werden durch die Druck- und/oder Zugkraft der Gravitationsdruckübertragungseinheiten angetrieben.

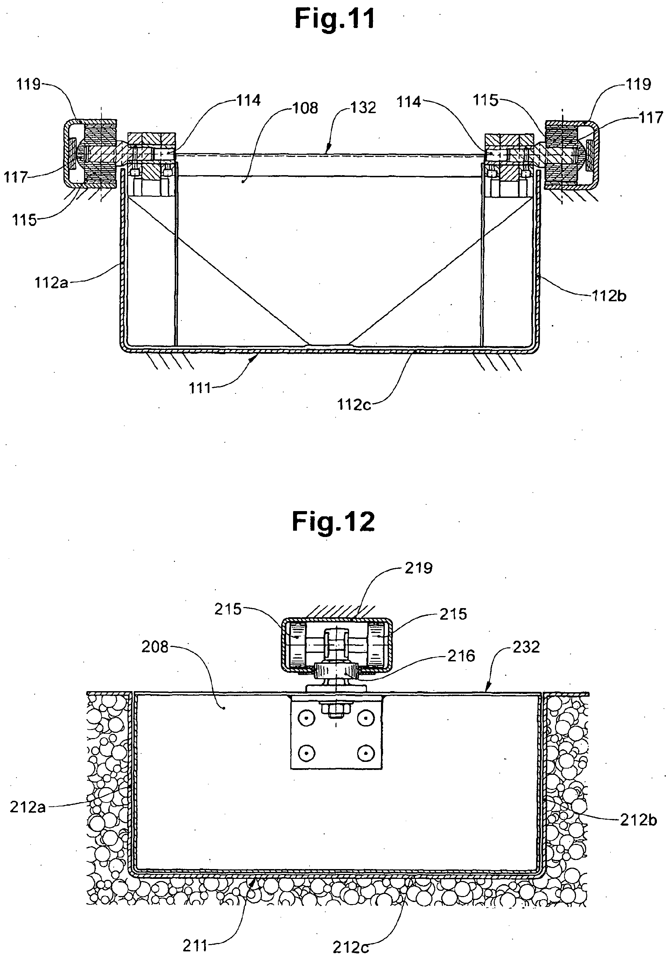

In Figur 11 ist eine mögliche konstruktive Lösung der Zwangsführung gemäss der weiter oben beschriebenen dritten Untervariante dargestellt. Die Ausführungsform gemäss Figur 11 zeigt einen rechteckförmigen Wasserführungskanal 111 mit einem Kanalboden 112c und zwei Kanalseitenwänden 112a, 112b. Seitlich am Wasserführungskanal 111 im öffnungsseitigen Bereich der Kanalseitenwände 112a, 112b sind beidseitig Führungsschienen 119 angeordnet.

Die Gravitationsdruckübertragungseinheit 132 ist mit ihrem Anströmorgan 108 im Wasserführungskanal 111 angeordnet. Das Anströmorgan 108 ist berührungsfrei im Wasserführungskanal 111 geführt, nimmt jedoch unter Ausbildung kleiner Spaltabstände praktisch den gesamten Querschnitt des Wasserführungskanals 111 ein.

Die Gravitationsdruckübertragungseinheit 132 enthält zwei, bezüglich Umlaufrichtung am radial innen liegenden Endabschnitt des Anströmorgans 108 und seitlich von diesem angeordnete Gleitelemente 115.

Die Führungsschienen 119 umfassen jeweils ein U-förmiges Längsprofil, welches zu den diesen zugeordneten Gleitelementen 115 hin offen ist. Die Längsprofile sind also mit ihren Führungskanalöffnungen zueinander hin gerichtet. Die Gleitelemente 115 sind im Führungskanal gleitend geführt.

Die Gleitelemente 115 weisen jeweils ein seitlich nach aussen zur Führungsschiene 119 hin gerichtetes kalottenförmiges Seitenführungselement 117 auf, über welche die Gravitationsdruckübertragungseinheit 132 seitlich in der Führungsschiene 119 geführt ist.

Die Gleitelemente 115 sind über quer zur Umlaufrichtung angeordneten Verbindungsachsen 114 am Anströmorgan 108 befestigt.

In Figur 12 ist eine mögliche konstruktive Lösung der Zwangsführung gemäss der weiter oben beschriebenen zweiten Ausführungsvariante dargestellt. Die Anlage gemäss Figur 12 zeigt ebenfalls einen rechteckförmigen Wasserführungskanal 211 mit einem Kanalboden 212c und zwei Kanalseitenwänden 212a, 212b.

Über dem Wasserführungskanal 211 ist eine Führungsschiene 219 angeordnet. Die Führungsschiene 219 umfasst ein C-förmiges Längsprofil, welches zum Wasserführungskanal 211 hin offen ist und eine spaltförmige Führungskanalöffnung ausbildet.

Die Gravitationsdruckübertragungseinheit 232 ist mit ihrem Anströmorgan 208 im Wasserführungskanal 211 angeordnet. Das Anströmorgan 208 ist berührungsfrei im Wasserführungskanal 211 geführt nimmt jedoch unter Ausbildung kleiner Spaltabstände praktisch den gesamten Querschnitt des Wasserführungskanals 211 ein.

Die Gravitationsdruckübertragungseinheit 232 enthält zwei voneinander beabstandete und über eine Achse miteinander verbundene Führungsrollen 215, die über dem Anströmorgan 208 zwischen den in Umlaufrichtung betrachtet seitlichen Endabschnitten des Anströmorgan 208 und hier ausserhalb des Wasserführungskanals 211 angeordnet sind. Die Führungsrollen 215 sind im C-förmigen Führungskanal der Führungsschiene 219 rollend geführt.

Die Führungsrollen 215 sind über eine durch die Führungskanalöffnung geführte Aufhängung mit dem Anströmorgan 208 verbunden. Die Gravitationsdruckübertragungseinheit 232 enthält ferner im Bereich der Aufhängung ein Horizontalführungselement 216, welches in der spaltförmigen Führungskanalöffnung geführt ist und so das Anströmorgan 208 seitlich führt. Das Horizontalführungselement 216 kann ebenfalls eine Rolle sein.

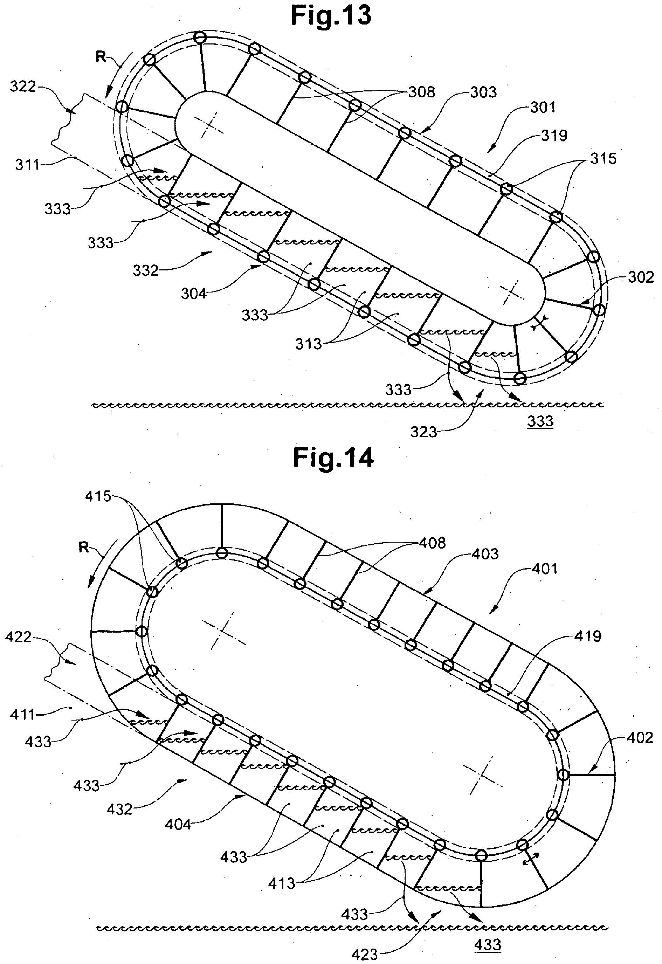

In Figur 13 bis 15 sind die drei Untervarianten der weiter oben beschriebenen ersten Ausführungsvariante der erfindungsgemässen Zwangsführung schematisch dargestellt. Die Anlage 301, 401, 501 enthält eine Antriebsanordnung 302, 402, 502 mit einer Mehrzahl von hintereinander und voneinander beabstandet angeordneten Gravitationsdruckübertragungseinheiten 332, 432, 532.

Die Gravitationsdruckübertragungseinheiten 332, 432, 532 enthalten jeweils ein Anströmorgan 308, 408, 508. Benachbarte Anströmorgane 308, 408, 508 bilden jeweils in einem Lastabschnitt 304, 404, 504 Wasseraufnahmeabteile 313, 413, 513 aus.

Die Gravitationsdruckübertragungseinheiten 332 enthalten in Umlaufrichtung R betrachtet ferner jeweils zwei seitlich vom Anströmorgan 308, 408, 508 angeordnete Führungselemente 315, 415, 515.

Die Anlage 301, 401, 501 enthält im Weiteren zwei jeweils seitlich vom bzw. am Wasserführungskanal (nicht gezeigt) parallel zueinander angeordnete und voneinander beabstandete Führungsschienen 319, 419, 519. Die Führungsschienen 319, 419, 519 führen unter anderem durch einen Lastabschnitt 304, 404, 504 und einen Rückführabschnitt 303, 403, 503.

Die Führungsschienen 319, 419, 519 bilden eine geschlossene Zwangsführung entlang der Umlaufbahn der Gravitationsdruckübertragungseinheiten 332, 432, 532 aus. Die Gravitationsdruckübertragungseinheiten 332, 432, 532 sind über die Führungselemente 315, 415, 515 entlang der Führungsschienen 319, 419, 519 zwangsgeführt.

Wasser 333, 433, 533 fliesst nun in einem höher gelegenen Einlaufbereich 322, 422, 522 in die Wasseraufnahmeabteile 313, 413, 513 ein und bewegt die Gravitationsdruckübertragungseinheiten 332, 432, 532 in Richtung eines Auslassbereichs 323, 423, 523, in welchem das Wasser wieder aus den Wasseraufnahmeabteile 313, 413, 513 entlassen wird.

Das Wasser 333, 433, 533 fliesst im Auslassbereich 323, 423, 523 bevorzugt in vertikaler oder im Wesentlichen in vertikaler Richtung nach unten aus den Wasseraufnahmeabteilen 313, 413, 513 aus, so dass die Anströmorgane 308, 408, 508 möglichst kein Restwasser in Richtung des Rückrührabschnittes 303, 403, 503 mitnehmen.

Das Umlenkorgan am oberen und unteren Umlenkabschnitt wird unter anderem durch bogenförmige Abschnitte der Führungsschiene 319, 419, 519 ausgebildet, welche den Lastabschnitt mit dem Rückführabschnitt der Führungsschiene verbindet.

In Figur 13 ist nun die oben erwähnte erste Untervariante dargestellt. Die Führungselemente 315 sind hier bezüglich der geschlossenen Umlaufbahn seitlich am radial aussen liegenden Endabschnitt des Anströmorgans 308 angeordnet. Die Führungsschienen 319, in welchen die Führungselemente 315 geführt sind, sind seitlich im Bereich des bodenwärtigen Endabschnitts des Wasserführungskanals 311 angeordnet.

Gemäss dieser Anordnung werden die Wasseraufnahmeabteile 313 in der Umlenkung am oberen und unteren Umlenkorgan durch die radiale Ausrichtung der Anströmorgane 308 im Umlenkbogen keilartig verkleinert.

Die Zwangsführung gemäss der vorliegenden ersten Untervariante erlaubt im Vergleich zur zweiten und insbesondere zur dritten Untervariante eine äusserst kompakte Bauweise der Anlage, ohne dass dadurch die Aufnahmekapazität der Wasseraufnahmeabteile oder die Länge des Lastabschnittes verringert würde.

In Figur 14 ist die oben erwähnte dritte Untervariante dargestellt. Die Führungselemente 415 sind hier bezüglich der geschlossenen Umlaufbahn am radial innen liegenden Endabschnitt des Anströmorgans 408 angeordnet. Die Führungsschienen 419, in welchen die Führungselemente 415 gerührt sind, können seitlich im Bereich des öffnungsseitigen Endabschnitts des Wasserführungskanals 411 oder über dem Wasserführungskanal 411 angeordnet sein (siehe auch Figur 11 und 12).

Eine Querschnittsansicht durch den Wasserführungskanal einer möglichen konstruktiven Lösung der Zwangsführung gemäss dieser dritte Untervariante ist wie bereits erwähnt in Figur 11 dargestellt.

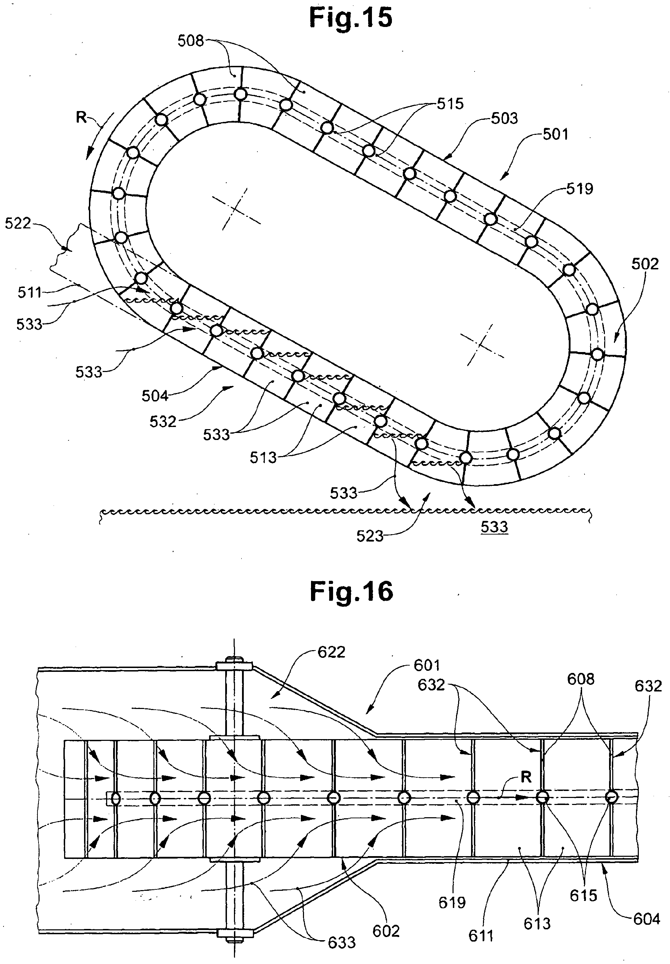

In Figur 15 ist die oben erwähnte zweite Untervariante dargestellt. Die Führungselemente 515 sind bezüglich der geschlossenen Umlaufbahn seitlich zwischen den radial aussen und innen liegenden Endabschnitten des Anströmorgans 508 angeordnet. Die Führungsschienen 519 sind seitlich im Bereich zwischen dem bodenwärtigen und dem öffnungsseitigen Endabschnitt des Wasserführungskanals 511 in den Kanalseitenwänden angeordnet.

Die Figur 16 zeigt die oben beschriebene dritte Untervariante einer Zwangsführung (siehe auch Figur 12 und 14). Die Anlage 601 umfasst eine mittig über dem Wasserführungskanal 611 angeordnete Führungsschiene 619. Die Gravitationsdruckübertragungseinheiten 632 enthalten jeweils ein Anströmorgan 608 sowie ein über dem Anströmorgan 608 mittig zwischen dessen in Umlaufrichtung betrachtet seitlichen Endabschnitten angeordnetes Führungselement 615, welches im Bereich des Lastabschnittes 604 in der Führungsschiene 619 geführt ist.

Der Einlaufbereich 622 ist so ausgebildet, dass das Wasser 633 unter anderem seitlich schräg in die sich ausbildenden Wasseraufnahmeabteile 613 einfliesst und das in den Wasserführungskanal 611 eintauchende Anströmorgan 608 anströmt. Dadurch wird eine schnellere und effizientere Befüllung der Wasseraufnahmeabteile 613 erreicht.

Eine Querschnittsansicht durch den Wasserführungskanal einer möglichen konstruktiven Lösung der Zwangsführung gemäss dieser zweiten Ausführungsvariante ist wie bereits erwähnt in Figur 12 dargestellt.

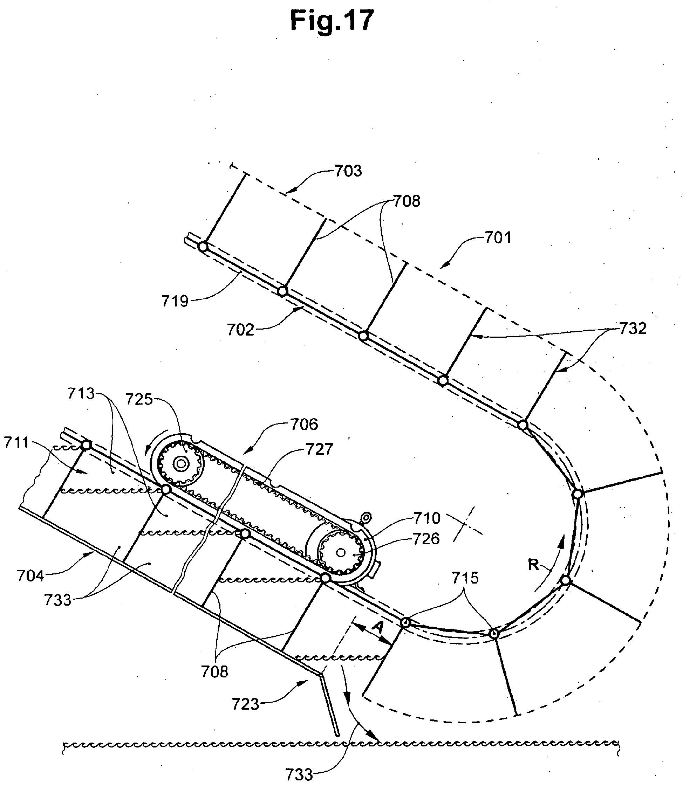

Die Figur 17 zeigt eine Teilansicht vom Auslassbereich 723 einer weiteren Ausführungsforrn einer erfindungsgemässen Anlage 701. Die Anlage 701 enthält eine Antriebsanordnung 702 mit einer Vielzahl entlang einer geschlossenen Umlaufbahn zwangsgeführten Gravitationsdruckübertragungseinheiten 732. Die Zwangsführung der Antriebsanordnung 702 geschieht über in einer Führungsschiene 719 geführte Führungselemente 715 und entspricht der Zwangsführung gemäss der dritten Untervariante nach Figur 14. Bezüglich Beschreibung der Zwangsführung wird daher auf die Ausführungen zu Figur 14 verwiesen.

Die Gravitationsdruckübertragungseinheiten 732 enthalten jeweils ein sich quer über die Breite des Wasserführungskanals 711 erstreckendes Anströmorgan 708. Zwei benachbarte Anströmorgane 708 bilden jeweils zusammen mit dem Wasserführungskanal 711 ein Wasseraufnahmeabteil 713 aus.

Die Anlage 701 weist einen geneigt verlaufenden Lastabschnitt 704 mit einem an dessen unteren Ende angeordneten Auslassbereich 723 auf. Im Auslassbereich 723 ist ein schachtartiger Auslass vorgesehen, über welchen das in den Wasseraufnahmeabteilen 713 gehaltene Wasser 733 im Wesentlichen vertikal nach unten ausgelassen wird.

Im Anschluss an das Auslassen des Wassers 733 werden die Gravitationsdruckübertragungseinheiten 732 in einem Bogen um in einen Rückführabschnitt 703 geführt, welcher die Gravitationsdruckübertragungseinheiten 732 wieder in den Einlaufbereich zurückführt (nicht gezeigt).

Das Umlenkorgan im unteren Umlenkbereich wird durch einen bogenförmigen Abschnitt der Führungsschiene 719 ausgebildet, welcher den Lastabschnitt mit dem Rückführabschnitt der Führungsschiene 719 verbindet.

Die Antriebsanordnung 702 steht im unteren Bereich des Lastabschnittes 704 mit einem Schleppantrieb 706 in Eingriff. Der Schleppantrieb 706 weist ein um zwei voneinander beabstandete Umlenkorgane 725, 726 geführtes, flexibles Antriebsorgan 727 auf, welches über einen Eingriffabschnitt mit der Antriebsanordnung 702 in form- und/oder kraftschlüssigem Eingriff steht.

Die am Schleppantrieb 706 vorbei zum unteren Umlenkorgan geführten Gravitationsdruckübertragungseinheiten 732 der Antriebsanordnung 702 treiben nun das Antriebsorgan 727 des Schleppantriebes 706 an. Ein Generator 710 nimmt an einem der Umlenkorgane 726 des Schleppantriebs 706 Drehmoment zur Stromerzeugung ab.

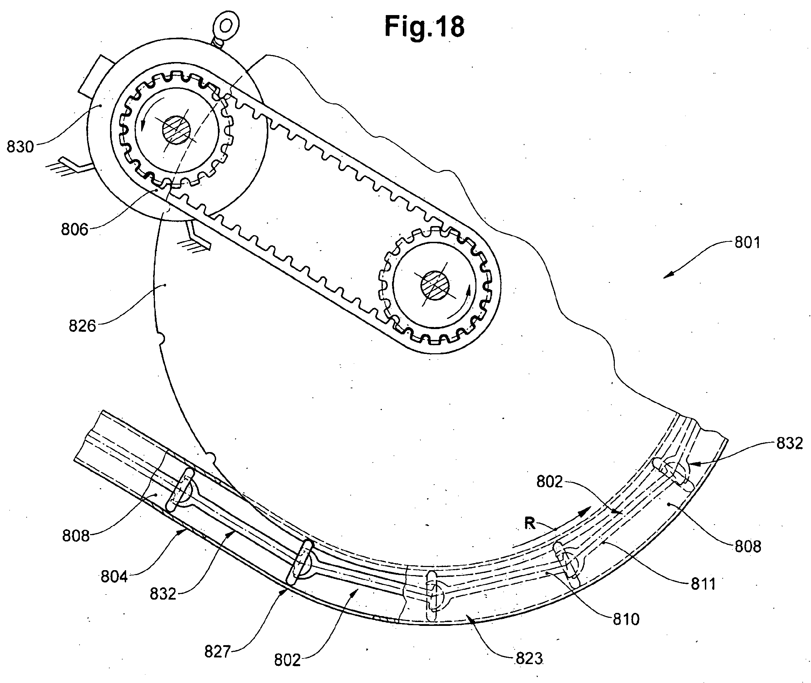

Die Figur 18 zeigt eine Teilansicht vom Auslassbereich 823 einer weiteren Ausführungsform einer erfindungsgemässen Anlage 801. Die Anlage 801 enthält eine Antriebsanordnung 802 mit einer Vielzahl entlang einer geschlossenen Umlaufbahn zwangsgeführten Gravitationsdruckübertragungseinheiten 832.

Die Gravitationsdruckübertragungseinheiten 832 enthalten jeweils ein sich quer über die Breite des Wasserführungskanals 827 erstreckendes Anströmorgan 808. Diese unterteilen den Wasserführungskanal 827 im Lastabschnitt 804 in Wasseraufnahmeabteile. Der Wasserführungskanal 827 ist im Lastabschnitt 804 geschlossen rohrförmig ausgebildet. Im Auslassbereich 823 ist der rohrförmige Wasserführungskanal 827 gegen unten offen, so dass das Wasser aus den Wasseraufnahmeabteilen abfliessen kann.

Die Gravitationsdruckübertragungseinheiten 832 sind nicht miteinander fest verbunden sondern als Druckkörper ausgebildet. Gravitationsdruckübertragungseinheiten 832 enthalten hierzu Kraftübertragungsorgane 810, 811 zur Übertragung von Druckkräften von einer in Umlaufrichtung vorangehenden Gravitationsdruckübertragungseinheit 832 auf eine nachfolgende Gravitationsdruckübertragungseinheit 832.

Die Kraftübertragungsorgane 810, 811 weisen miteinander kooperierende Druckflächen auf, über welche die Druckkräfte zwischen den Gravitationsdruckübertragungseinheiten 832 weiter gegeben werden. Auf diese Weise lässt sich die Antriebsanordnung über reine Druckkräfte ähnlich einer Antriebskette in Umlaufrichtung um die Umlenkorgane bewegen, ohne dass jedoch die Gravitationsdruckübertragungseinheiten 832 miteinander fest verbunden sind.

Im unteren Umlenkbereich ist ein Drehkörper 826 angeordnet. Der Drehkörper 826 weist an seinem Umfang Vertiefungen auf, in welche Elemente, wie z. B. die Anströmorgane 808, der Gravitationsdruckübertragungseinheiten 832 eingreifen. Der Drehkörper 826 wird über diesen formschlüssigen Eingriff durch die Gravitationsdruckübertragungseinheiten 832 angetrieben. Der Drehkörper 826 bildet Teil des unteren Umlenkorgans aus. Der rohrförmige Wasserführungskanal, welcher zugleich Führungsschiene für die die Antriebsanordnung 802 ist, ist als weiterer Teil des Umlenkorgans bogenförmig um den Drehkörper 826 geführt und verbindet den Lastabschnitt mit dem Rückführabschnitt (nicht gezeigt) des Wasserführungskanals bzw. der Führungsschiene. Die rohrförmige Führungsschiene ist im bogenförmigen Umlenkabschnitt zum Drehkörper 826 hin offen, so dass die Elemente der Gravitationsdruckübertragungseinheiten 832 in die Vertiefungen am Drehkörper 826 eingreifen können.

Der Drehkörper 826 ist über ein Antriebsmittel 806, wie Riemen oder Getriebe, mit einem Generator 830 verbunden. Dieser nimmt der Antriebsanordnung 802 Leistung zur Stromerzeugung ab.

## Patentansprüche

1. Anlage (1) zur Gewinnung von elektrischer Energie aus Wasserkraft, enthaltend eine um zwei voneinander beabstandete Umlenkorgane (5, 6) umlaufende Antriebsanordnung (2), welche durch Wasserkraft in eine Umlaufrichtung (R) antreibbar ist, mit einem entlang eines Gefälles verlaufenden Lastabschnitt (4), wobei die Antriebsanordnung (2) eine Mehrzahl von in Umlaufrichtung (R) hintereinander angeordnete und voneinander beabstandete Gravitationsdruckübertragungseinheiten (32) mit jeweils einem Anströmorgan (8) enthält, ferner enthaltend einen Generator (10) zur Gewinnung von elektrischer Energie aus der umlaufenden Antriebsanordnung (2),
**dadurch gekennzeichnet, dass**
die Anlage (1) einen, entlang des Gefälles verlaufenden Wasserführungskanal (11) umfasst, wobei die Anströmorgane (8) der Gravitationsdruckübertragungseinheiten (32) im Bereich des Lastabschnitts (4) quer zum Wasserführungskanal (11) verlaufen und in diesen eingreifen, wobei jeweils zwei benachbarte - Anströmorgane (8) zusammen mit den Kanalwänden (12a, 12b, 12c) ein entlang des Wasserführungskanals (11) mitbewegtes Abteil (13) zur Wasseraufnahme ausbilden, und die Gravitationsdruckübertragungseinheiten (32) Führungselemente (15) aufweisen und die Anlage (1) entlang des Lastabschnitts (4) Führungsmittel (19) enthält, in welchen Führungselemente (15) der Gravitationsdruckübertragungseinheiten (32) verschiebbar angeordnet sind, derart dass die Gravitationsdruckübertragungseinheiten (32) wenigstens im Bereich des Lastabschnitts (4) zwischen den beiden Umlenkorganen (5, 6) führbar sind.

2. Anlage nach Anspruch 1, **dadurch gekennzeichnet, dass** die Führungsmittel (19) wenigstens eine Führungsschiene umfassen.

3. Anlage nach Anspruch 1 oder 2, **dadurch gekennzeichnet, dass** die Gravitationsdruckübertragungseinheiten (32) mehrteilig ausgebildet sind.

4. Anlage nach einem der Ansprüche 1 bis 3, **dadurch gekennzeichnet, dass** die - Anströmorgane (8) jeweils ein quer zum Wasserführungskanal (11) angeordnetes Wandelement (30a, 30b, 30c), insbesondere ein schaufelförmiges Wandelement (30a, 30b, 30c), umfassen.

5. Anlage nach einem der Ansprüche 1 bis 4, **dadurch gekennzeichnet, dass** die - Anströmorgane (8) jeweils wenigstens ein Versteifungselement (14), insbesondere eine Versteifungsrippe oder eine Versteifungsquerwand, aufweisen.

6. Anlage nach einem der Ansprüche 1 bis 5, **dadurch gekennzeichnet, dass** die Führungselemente (15) als Führungsrollen oder Gleitelemente ausgebildet sind.

7. Anlage nach einem der Ansprüche 2 bis 6, **dadurch gekennzeichnet, dass** die Gravitationsdruckübertragungseinheiten (32, 132, 332, 432, 532) in Umlaufrichtung (R) betrachtet jeweils zwei seitlich vom Anströmorgan (8, 108, 308, 408, 508) angeordnete Führungselemente (15, 115, 315, 415, 515) und die Anlage (1, 301, 401, 501) im Lastabschnitt (4, 304, 404, 504) zwei jeweils seitlich am Wasserführungskanal (11, 111, 311, 411, 511) angeordnete Führungsschienen (19, 119, 319, 419, 519) enthält, wobei die Führungselemente (15, 115, 315, 415, 515) entlang des Lastabschnitts (4, 304, 404, 504) in den Führungsschienen (19, 119, 319, 419, 519) geführt sind, und
a. die Führungselemente (315) seitlich am aussen liegenden Endabschnitt des Anströmorgans (308) und die Führungsschienen (319) seitlich im bodenwärtigen Endabschnitt des Wasserführungskanals (311) angeordnet sind; oder
b. die Führungselemente (515) seitlich zwischen dem aussen und innen liegenden Endabschnitt des Anströmorgans (508) und die Führungsschienen (519) seitlich zwischen dem bodenwärtigen und dem öffnungsseitigen Endabschnitt des Wasserführungskanals (511) angeordnet sind; oder
c. die Führungselemente (15, 115, 415) seitlich am innen liegenden Endabschnitt des Anströmorgans (8, 108, 408) und die Führungsschienen (19, 119, 419) seitlich im öffnungsseitigen Endabschnitt des Wasserführungskanals (11, 111, 411) angeordnet sind.

8. Anlage nach einem der Ansprüche 2 bis 7, **dadurch gekennzeichnet, dass** die Anlage (601) eine über dem Wasserführungskanal (211, 611) angeordnete Führungsschiene (215, 615) enthält, und die Gravitationsdruckübertragungseinheiten (232, 632) jeweils wenigstens ein über dem Anströmorgan (208, 608) angeordnetes Führungselement (215, 615) enthalten, welches im Bereich des Lastabschnittes (604) in der Führungsschienen (215, 615) geführt ist.

9. Anlage nach einem der Ansprüche 2 bis 8, **dadurch gekennzeichnet, dass** die Führungsschiene (19, 119, 219, 319, 419) ein Profillängskörper mit einem Führungskanal zur führenden Aufnahme der Führungselemente (15, 115, 215, 315, 415, 515) ist.

10. Anlage nach einem der Ansprüche 1 bis 9, **dadurch gekennzeichnet, dass** die Gravitationsdruckübertragungseinheiten (832) der Antriebsanordnung (802) nicht miteinander verbunden sind und Kraftübertragungsorgane (810, 811) zur Übertragung von Druckkräften aufweisen.

11. Anlage nach einem der Ansprüche 1 bis 9, **dadurch gekennzeichnet, dass** die Antriebsanordnung (2) eine zusammenhängende Antriebsstruktur (7) mit einer Mehrzahl von Antriebsgliedern (9) ist, und die Gravitationsdruckübertragungseinheiten (32) Antriebsgliedern (9) entsprechen und Verbindungsorgane (16a, 16b) zum gegenseitigen gelenkigen Verbinden der Antriebsglieder (9) zu einer zusammenhängenden Antriebsstruktur (7) enthalten.

12. Anlage nach Anspruch 11, **dadurch gekennzeichnet, dass** Führungsrollen (15) an den Verbindungsorganen (16a, 16b) angeordnet und jeweils über eine Rollenachse (18) mit diesen verbunden sind, und die Rollenachse (18) gleichzeitig ein Verbindungselement zwischen den Antriebsgliedern (9) ausbildet.

13. Anlage nach einem der Ansprüche 1 bis 12, **dadurch gekennzeichnet, dass** die Umlenkorgane (5), jeweils einen Drehkörper (20) aufweisen, entlang welchen die Gravitationsdruckübertragungseinheiten (32), insbesondere die Verbindungselemente der Antriebsglieder (9) über einen formschlüssigen Eingriff in einer Bogenbahn verlaufen.

14. Anlage nach einem der Ansprüche 1 bis 13, **dadurch gekennzeichnet, dass** ein Umlenkorgan (6) im unteren Umlenkbereich, welches vorzugsweise nicht mit einem Stromerzeugungsgenerator (10) gekoppelt ist, als bogenförmig verlaufendes Führungsmittel (19) ausgestaltet ist, wobei die Antriebsanordnung (11) bogenförmig entlang des Führungsmittels (19) geführt ist, und wobei am Umlenkorgan (6) im Anschluss an den Lastabschnitt (4) vorzugsweise ein Übergangsbogen (21) ausgebildet ist, welcher sich durch einen kontinuierlich abnehmenden Krümmungsradius auszeichnet.

15. Anlage nach einem der Ansprüche 1 bis 14, **dadurch gekennzeichnet, dass** die Anlage einen Entlastungskanal (27) aufweist, über welchen Wasser (W) vor dem Einlaufbereich (20) abgezweigt und am Wasserführungskanal (11) vorbei geführt werden kann.

## Claims

1. An installation (1) for generating electrical energy from hydropower, comprising a drive arrangement (2) which revolves around two deflection means (5, 6) distanced to one another, wherein the drive arrangement (2) can be driven by hydropower in a revolving direction (R), with a load section (4) running along a descent, wherein the drive arrangement (2) comprises a plurality of gravitational pressure transmission units (32) which are arranged one after the other in the revolving direction (R), are distanced to one another and in each case are with an onflow element (8), further comprising a generator (10) for generating electrical energy from the revolving drive arrangement (2),
**characterised in that**
the installation (1) comprises a water guidance channel (11) which runs along the descent, wherein the onflow elements (8) of gravitational pressure transmission units (32) in the region of the load section (4) run transversely to the water guidance channel (11) and engage into this, wherein in each case two adjacent onflow elements (8) together with the channel walls (12a, 12b, 12c) form a compartment (13) for receiving water, which is co-moved along the water guidance channel (11), and
the gravitational pressure transmission units (32) comprise guide elements (15) and the installation (1) comprises guide means (19) along the load section (4), in which guide means guide elements (15) of the gravitational pressure transmission units (32) are displaceably arranged in a manner such that the gravitational pressure transmission units (32) at least in the region of the load section (4) are guidable between the two deflection means (5, 6).

2. An installation according to claim 1, **characterised in that** the guide means (19) comprise at least one guide rail.

3. An installation according to claim 1 or 2, **characterised in that** the gravitational pressure transmission units (32) are designed of several parts.

4. An installation according to one of the claims 1 to 3, **characterised in that** the onflow elements (8) in each case comprise a wall element (30a, 30b, 30c), in particular a blade-like wall element (30a, 30b, 30c), which is arranged transversely to the water guidance channel (11).

5. An installation according to one of the claims 1 to 4, **characterised in that** the onflow elements (8) in each case comprise at least one stiffening element (14), in particular a stiffening rib or a stiffening transverse wall.

6. An installation according to one of the claims 1 to 5, **characterised in that** the guide elements (15) are designed as guide rollers or sliding elements.

7. An installation according to one of the claims 2 to 6, **characterised in that** the gravitational pressure transmission units (32, 132, 232, 432, 532) in each case comprise two guide elements (15, 115, 215, 315, 415, 515) which considered in the revolving direction (R) are arranged laterally of the onflow element (8, 108, 308, 408, 508), and the installation (1, 301, 401, 501) in the load section (4, 304, 404, 504) comprises two guide rails (19, 119, 319, 419, 519) which are each arranged laterally on the water guidance channel (11, 311, 411, 511), wherein the guide elements (15, 115, 215, 315, 415, 515) are led along the load section (4, 304, 404, 504) in the guide rails (19, 119, 319, 419, 519), and
a. the guide elements (315) are arranged laterally on the outwardly lying end section of the onflow element (308), and the guide rails (319) are arranged laterally in the end section of the water guidance channel (311) which is towards the base; or
b. the guide elements (515) are arranged laterally between the outwardly and inwardly lying end section of the onflow element (508), and the guide rails (519) are arranged laterally between the end section which is towards the base, and the opening-side end section, of the water guidance channel (511); or
c. the guide elements (15, 115, 415) are arranged laterally on the inwardly lying end section of the onflow element (8, 108, 408), and the guide rails (19, 119, 419) are arranged laterally in the opening-side end section of the water guidance channel (11, 111,411).

8. An installation according to one of the claims 2 to 7, **characterised in that** the installation (601) comprises a guide rail (215, 615) arranged above the water guidance channel (211, 611), and the gravitational pressure transmission units (232, 632) in each case comprise at least one guide element (215, 615) which is arranged above the onflow element (208, 608) and which in the region of the load section (604) is led in the guide rails (215, 615).

9. An installation according to one of the claims 2 to 8, **characterised in that** the guide rail (19, 119, 319, 419, 519) is a profile longitudinal body with a guide channel for the guided receiving of the guide elements (15, 115, 215, 315, 415, 515).

10. An installation according to one of the claims 1 to 9, **characterised in that** the gravitational pressure transmission units (832) of the drive arrangement (802) are not connected to one another and comprise force transmission elements (810, 811) for the transmission of push forces.

11. An installation according to one of the claims 1 to 9, **characterised in that** the drive arrangement (2) is a connected drive structure (7), with a plurality of drive links (9), and the gravitational pressure transmission units (32) correspond to drive links (9) and comprise connection means (16a, 16b) for the mutual articulated connection of the drive links (9) into a connected drive structure (7).

12. An installation according to claim 11, **characterised in that** guide rollers (15) are arranged on the connection means (16a, 16b) and are connected to these in each case via a roller pivot (18), and the roller pivot (18) also forms a connection element between the drive links (9).

13. An installation according to one of the claims 1 to 12, **characterised in that** the deflection means (5) each comprise a rotation body (20), along which the gravitational pressure transmission units (32), in particular the connection elements of the drive links (9), run in an arched track via a positive engagement.

14. An installation according to one of the claims 1 to 13, **characterised in that** a deflection means (6) in the lower deflection region and which preferably is not coupled to an electricity production generator (10), is designed as a guide means (19) which runs in an arched manner, wherein the drive arrangement (11) is led along the guide means (19) in an arched manner, and wherein preferably a transition arch (21) is formed on the deflection means (6) in a manner connecting to the load section (4) and is **characterised by** way of a continuously reducing radius of curvature.

15. An installation according to one of the claims 1 to 14, **characterised in that** the installation comprises a relief channel (27), via which water (W) can be branched off in front of the run-in region (20) and can be led past the water guidance channel (11).

## Revendications

1. Installation (1) permettant de produire de l'énergie électrique à partir de la force de l'eau, contenant
un ensemble d'entraînement (2) tournant autour de deux organes de renvoi (5, 6) maintenus à distance l'un de l'autre et apte à être entraîné dans un sens de rotation (R) par la force de l'eau et
une partie en charge (4) s'étendant en pente, l'ensemble d'entraînement (2) contenant plusieurs unités (32) de transfert de la poussée de gravitation disposées les unes derrière les autres, maintenues à distance les unes des autres et présentant chacune un organe (8) entraîné par l'écoulement, et contenant en outre un générateur (10) qui produit de l'énergie électrique à partir de la rotation de l'ensemble d'entraînement (2),
**caractérisée en ce que**
l'installation (1) comprend un canal (11) de guidage d'eau s'étendant en pente, les organes (8) d'attaque par l'écoulement des unités (32) de transfert de la poussée de gravitation s'étendant transversalement par rapport au canal (11) d'écoulement de l'eau au niveau de la partie en charge (4) et s'engageant dans ce canal,
**en ce que** deux organes (8) d'attaque par l'écoulement voisins formant avec les parois (12a, 12b, 12c) du canal un compartiment (13) de reprise d'eau entraîné conjointement le long du canal (11) de guidage d'eau,
**en ce que** les unités (32) de transfert de la poussée de gravitation présentent des éléments de guidage (15) et
**en ce que** l'installation (1) contient le long de la section en charge (4) des moyens de guidage (19) dans lesquels les éléments de guidage (15) des unités (32) de transfert de la poussée de gravitation sont disposés de manière à pouvoir se déplacer, de telle sorte que les unités (32) de transfert de la poussée de gravitation peuvent être guidées entre les deux organes de renvoi (5, 6) au moins au niveau de la partie en charge (4).

2. Installation selon la revendication 1, **caractérisée en ce que** les moyens de guidage (19) comportent au moins un rail de guidage.

3. Installation selon les revendications 1 ou 2, **caractérisée en ce que** les unités (32) de transfert de la poussée de gravitation sont réalisées en plusieurs pièces.

4. Installation selon l'une des revendications 1 à 3, **caractérisée en ce que** les organes (8) d'attaque par l'écoulement présentent chacun un élément de paroi (30a, 30b, 30c), en particulier un élément de paroi (30a, 30b, 30c) en forme d'aube, disposé transversalement par rapport au canal (11) de guidage de l'eau.

5. Installation selon l'une des revendications 1 à 4, **caractérisée en ce que** les organes (8) d'attaque par l'écoulement présentent chacun au moins un élément de renfort (14), notamment une nervure de renfort ou une paroi transversale de renfort.

6. Installation selon l'une des revendications 1 à 5, **caractérisée en ce que** les éléments de guidage (15) sont configurés comme rouleaux de guidage ou éléments coulissants.

7. Installation selon l'une des revendications 2 à 6, **caractérisée en ce que** les unités (32, 132, 332, 432, 532) de transfert de la poussée de gravitation contiennent dans le sens de rotation (R) deux éléments de guidage (15, 115, 315, 415, 515) disposés latéralement par rapport à l'organe (8, 108, 308, 408, 508) d'attaque par l'écoulement et **en ce que** dans la section en charge (4, 304, 404, 504), l'installation (1, 301, 401, 501) contient deux rails de guidage (19, 119, 319, 419, 519) disposés latéralement sur le canal (11, 111, 311, 411, 511) de guidage de l'eau, les éléments de guidage (15, 115, 315, 415, 515) étant guidés dans les rails de guidage (19, 119, 319, 419, 519) le long de la section en charge (4, 304, 404, 504), et **en ce que**
a. les éléments de guidage (315) sont disposés latéralement sur la section d'extrémité de l'organe (308) d'attaque par l'écoulement située à l'extérieur et les rails de guidage (319) sont disposés latéralement dans la partie d'extrémité, située au fond, du canal (311) de guidage de l'eau,
b. les éléments de guidage (515) sont disposés latéralement entre la section d'extrémité extérieure et la section d'extrémité intérieure de l'organe (508) d'attaque par l'écoulement et les rails de guidage (519) sont disposés latéralement entre la section d'extrémité côté fond et la section d'extrémité côté ouverture du canal (511) de guidage de l'eau ou
c. les éléments de guidage (15, 115, 415) sont disposés latéralement sur la section d'extrémité située à l'intérieur de l'organe (8, 108, 408) d'attaque par l'écoulement et les rails de guidage (19, 119, 419) sont disposés latéralement sur la section d'extrémité située côté ouverture du canal (11, 111, 411) de guidage de l'eau.

8. Installation selon l'une des revendications 2 à 7, **caractérisée en ce que** l'installation (601) contient un rail de guidage (215, 615) disposé au-dessus du canal (211, 611) de guidage de l'eau et **en ce que** les unités (232, 632) de transfert de la poussée de gravitation contiennent chacune au moins un élément de guidage (215, 615) disposé au-dessus de l'organe (208, 608) d'attaque par l'écoulement et qui est guidé dans les rails de guidage (215, 615) au niveau de la section en charge (604).

9. Installation selon l'une des revendications 2 à 8, **caractérisée en ce que** le rail de guidage (19, 119, 219, 319, 419) est un corps allongé profilé présentant un canal de guidage qui reprend et guide les éléments de guidage (15, 115, 215, 315, 415, 515).

10. Installation selon l'une des revendications 1 à 9, **caractérisée en ce que** les unités (832) de transfert de la poussée de gravitation de l'ensemble d'entraînement (802) ne sont pas reliées les unes aux autres et présentent des organes (810, 811) de transfert de force qui transfèrent les forces de poussée.

11. Installation selon l'une des revendications 1 à 9, **caractérisée en ce que** l'ensemble d'entraînement (2) est une structure d'entraînement (7) continue dotée de plusieurs organes d'entraînement (9) et **en ce que** les unités (32) de transfert de la poussée de gravitation correspondent aux éléments d'entraînement (9) et contiennent les organes de liaison (16a, 16b) permettant de relier mutuellement de manière articulée les organes d'entraînement (9) pour former une structure continue d'entraînement (7).

12. Installation selon la revendication 11, **caractérisée en ce que** des rouleaux de guidage (15) sont disposés sur les organes de liaison (16a, 16b) et sont reliés chacun à ces derniers par un axe de rouleau (18), les axes de rouleau (18) formant en même temps un élément de liaison entre les organes d'entraînement (9).

13. Installation selon l'une des revendications 1 à 12, **caractérisée en ce que** les organes de renvoi présentent chacun un corps de rotation (20) le long duquel les unités (32) de transfert de la poussée de gravitation et en particulier les éléments de liaison des organes d'entraînement (9) s'étendent en une piste courbe par l'intermédiaire d'un engagement en correspondance géométrique.

14. Installation selon l'une des revendications 1 à 13, **caractérisée en ce que** dans la partie inférieure du renvoi un organe de renvoi (6), qui n'est de préférence pas accouplée à un générateur (10) de production de courant, est configuré comme moyen de guidage (19) s'étendant en arc de cercle, l'ensemble d'entraînement (11) étant guidé en arc de cercle le long du moyen de guidage (19), un arc de transition (21) qui se **caractérise par** un rayon de courbure qui diminue de manière continue, étant de préférence formé sur l'organe de renvoi (6) au raccord à la section en charge (4).

15. Installation selon l'une des revendications 1 à 14, **caractérisée en ce que** l'installation présente un canal de délestage (27) par lequel l'eau (W) est déviée en amont de la partie d'entrée (20) et peut être guidée le long du canal (11) de guidage de l'eau.
